# EUROPÄISCHE PATENTSCHRIFT

(11) **EP 4 552 964 B1**
(45) Veröffentlichungstag und Bekanntmachung des Hinweises auf die Patenterteilung: **15.04.2026**
(21) Anmeldenummer: 24212022.8
(22) Anmeldetag: 11.11.2024
(51) Int. Cl.: B62M 11/18, B62M 11/14

(54) **TRETLAGERGETRIEBE IN PLANETENBAUWEISE FÜR EIN FAHRRAD ODER EIN PEDELEC**
PLANET-TYPE BOTTOM-BRACKET TRANSMISSION FOR A BICYCLE OR A PEDELEC
TRANSMISSION DE PÉDALIER DE CONSTRUCTION PLANÉTAIRE POUR UNE BICYCLETTE OU UN VÉLO ÉLECTRIQUE

(30) Priorität: 13.11.2023 DE 102023211232
(43) Veröffentlichungstag der Anmeldung: 14.05.2025
(73) Patentinhaber: ZF Friedrichshafen AG, 88046 Friedrichshafen (DE)
(72) Erfinder: Beck, Stefan, 88097 Eriskirch (DE); Wechs, Michael, 88138 Weißensberg (DE); Kutter, Fabian, 88079 Kressbronn (DE); Martin, Thomas, 88138 Weissensberg (DE); Riedisser, Thomas, 88138 Sigmarszell (DE)
(74) Vertreter: ZF Friedrichshafen AG

(56) Entgegenhaltungen:
- EP-B1- 2 924 319
- DE-B3- 102022 207 261

## Beschreibung

Die vorliegende Erfindung betrifft ein Tretlagergetriebe in Planetenbauweise für ein Fahrrad oder ein Pedelec mit einer Getriebeeingangswelle bzw. Tretkurbelwelle als Antrieb und einer Getriebeausgangswelle als Abtrieb und mit weiteren Wellen sowie mit einer ersten Getriebeschaltgruppe mit einem Stufenplanetenradsatz und einer zweiten Getriebeschaltgruppe, denen mehrere Schaltelemente zugeordnet sind. Ferner betrifft die Erfindung ein Fahrrad oder Pedelec mit dem Tretlagergetriebe. Beispielsweise aus der Druckschrift DE 10 2022 203 243 B3 ist ein Getriebe in einem Tretkurbelgehäuse für ein Fahrrad oder Pedelec bekannt. Das Getriebe umfasst einen Stufenplanetenradsatzes und einen weiteren Planetenradsatz, welche koaxial zur Tretkurbelwelle angeordnet sind, denen sechs Schaltelemente zum Realisieren von sechs Gängen zugeordnet sind.

DE1022207261B3 offenbart ein gattungsgemäßes Tretlagergetriebe.

Der vorliegenden Erfindung liegt die Aufgabe zugrunde, ein Tretlagergetriebe und ein Fahrrad oder Pedelec mit dem Tretlagergetriebe vorzuschlagen, welche einen möglichst geringen Bauaufwand mit gegenüber dem Stand der Technik verbesserten Eigenschaften aufweisen.

Diese Aufgabe wird erfindungsgemäß durch die Merkmale des Patentanspruches 1 bzw. 17 gelöst. Vorteilhafte und beanspruchte Weiterbildungen ergeben sich aus den Unteransprüchen und der Beschreibung sowie den Zeichnungen.

Somit wird ein Tretlagergetriebe in Planetenbauweise für ein Fahrrad oder ein Pedelec vorgeschlagen. Das Tretlagergetriebe weist eine Tretkurbelwelle als Antrieb und eine Getriebeausgangswelle als Abtrieb sowie weitere Wellen auf, wobei der Abtrieb vorzugsweise über ein Kettenrad, ein Riemenrad oder dergleichen erfolgt. Ferner umfasst das Tretlagergetriebe eine erste Getriebeschaltgruppe und eine zweite Getriebeschaltgruppe, die zum Realisieren von mehreren Gängen miteinander gekoppelt sind, wobei die erste Getriebeschaltgruppe einen zweistufigen Stufenplanetenradsatz umfasst, dem drei Schaltelemente zugeordnet sind, wobei eine erste Welle als Eingangswelle des ersten Stufenplanetenradsatzes mit einem zweiten Hohlrad als Element des ersten Stufenplanetenradsatzes verbunden ist, wobei eine fünfte Welle als Ausgangswelle des ersten Stufenplanetenradsatzes mit einem ersten Hohlrad als Element des ersten Stufenplanetenradsatzes verbunden ist, wobei ein zweites Sonnenrad als Element des ersten Stufenplanetenradsatzes über ein erstes Schaltelement an einem Gehäuse bzw. an einem stationären Bauteil oder dergleichen festsetzbar ist, wobei ein erstes Sonnenrad als Element des ersten Stufenplanetenradsatzes über ein zweites Schaltelement an dem Gehäuse festsetzbar ist, wobei ein Stufenplanetenradträger als Element des ersten Stufenplanetenradsatzes drehbar gelagert ist, und wobei zum Verblocken des Stufenplanetenradsatzes zwei Elemente des ersten Stufenplanetenradsatzes über ein fünftes Schaltelement miteinander verbindbar sind, sodass theoretisch zehn wirkungsgleiche Verblockungsvarianten möglich sind.

Auf diese Weise wird mit der vorbeschriebenen Anbindung der ersten Getriebeschaltgruppe bei dem vorgeschlagenen Tretlagergetriebe mit einem vorgesehenen Stufenplanetenradsatz und nur drei vorgesehenen Schaltelementen ein besonders einfacher und kompakter Aufbau bei dem Tretlagergetriebe realisiert. Hinzu kommen besonders geringe Bauteilbelastungen und ein vorteilhaft hoher Verzahnungswirkungsgrad aufgrund der geometrischen Übersetzungsreihe bei dem Tretlagergetriebe gegenüber dem bekannten Getriebe.

Zur mechanischen Verbindung von Elementen, zum Beispiel Drehelementen oder dergleichen der beiden Planetenradsätze bei den beiden Getriebeschaltgruppen werden vorzugsweise neben Antrieb und Abtrieb weitere Wellen oder wellenartige Elemente verwendet, wobei unter dem Begriff Welle nicht ausschließlich ein zylindrisches, drehbar gelagertes Maschinenelement zur Übertragung von Drehmomenten zu verstehen ist, sondern vielmehr sind hierunter auch allgemeine Verbindungselemente zu verstehen, die die einzelnen Radsatzelemente miteinander zur Drehmomentübertragung verbinden.

Die axiale Reihenfolge der beiden Getriebeschaltgruppen kann bei dem vorgeschlagenen Tretlagergetriebe vertauscht werden. Demzufolge ist die erste Getriebeschaltgruppe zwischen der Getriebeeingangswelle bzw. der Tretkurbelwelle und der Getriebeausgangswelle des Tretlagergetriebes der zweiten Getriebeschaltgruppe vor- oder nachgeschaltet. Bei einer vorgeschalteten Anordnung der ersten Getriebeschaltgruppe ist eine mit der Getriebeeingangs- bzw. Tretkurbelwelle verbundene Tretkurbel des Tretlagergetriebes mit der ersten Welle quasi als Eingangswelle der ersten Getriebeschaltgruppe verbunden und die fünfte Welle der ersten Getriebeschaltgruppe ist eingangsseitig mit der zweiten Getriebeschaltgruppe verbunden. Es ist möglich, dass die Tretkurbelwelle und die erste Welle einteilig oder auch mehrteilig ausgeführt sind. Bei einer nachgeschalteten Anordnung der ersten Getriebeschaltgruppe ist die erste Welle ausgangsseitig mit der zweiten Getriebeschaltgruppe verbunden und die fünfte Welle der ersten Getriebeschaltgruppe ist mit der Getriebeausgangswelle verbunden. Es ist möglich, dass die Getriebeausgangswelle und die fünfte Welle einteilig oder mehrteilig ausgeführt sind.

Bei dem vorgeschlagenen Tretlagergetriebe kann eine beliebig ausgeführte mehrgängige zweite Getriebeschaltgruppe mit der ersten Getriebeschaltgruppe als Tretlagetriebe kombiniert werden. Vorzugsweise kann die zweite Getriebeschaltgruppe als Zweiganggetriebe bzw. Zweiganggruppe oder als Dreiganggetriebe bzw. Dreiganggruppe oder als Vierganggetriebe bzw. Vierganggruppe und die erste Getriebeschaltgruppe als Dreiganggetriebe bzw. Dreiganggruppe ausgeführt sein, sodass beispielsweise ein Sechsganggetriebe oder Neunganggetriebe oder Zehnganggetriebe oder Zwölfganggetriebe als Tretlagergetriebe realisiert wird. Es können jedoch auch andere Gangzahlen bei den Getriebeschaltgruppen realisiert werden, sodass das Tretlagergetriebe auch mehr oder weniger Gänge realisieren kann. Je nach Randbedingungen und Anforderungen bei dem Tretlagergetriebe können Gänge auch weggelassen werden. Auf diese Weise kann der Radsatz auf die geforderten Übersetzungen (Gangsprünge, Spreizung usw.) oder auch auf die Art der Schaltungen, wie viele Schaltelemente beteiligt sind, optimiert werden.

Zur Anbindung der zweiten Getriebeschaltgruppe kann zum Erreichen eines besonders einfachen und kompakten Aufbaus des Tretlagergetriebes vorgesehen sein, dass die zweite Getriebeschaltgruppe einen ersten Planetenradsatz umfasst, dem ein drittes Schaltelement und ein sechstes Schaltelement zugeordnet sind, wobei bei der zweiten Getriebeschaltgruppe ein zweites Element des ersten Planetenradsatzes mit der Tretkurbelwelle oder mit der fünften Welle als Ausgangswelle des ersten Stufenplanetenradsatzes verbunden ist, wobei ein erstes Element des ersten Planetenradsatzes über das drittes Schaltelement an dem Gehäuse festsetzbar ist, wobei ein drittes Element des ersten Planetenradsatzes mit der Getriebeausgangswelle oder mit der ersten Welle als Eingangswelle des ersten Stufenplanetenradsatzes verbunden ist, und wobei zum Verblocken des ersten Planetenradsatzes zwei Elemente des ersten Planetenradsatzes über das sechste Schaltelement miteinander verbindbar sind.

Eine mögliche Ausführung der Erfindung kann zur Anbindung der zweiten Getriebeschaltgruppe zum Erreichen eines besonders einfachen und kompakten Aufbaus des Tretlagergetriebes vorsehen, dass die zweite Getriebeschaltgruppe einen ersten Planetenradsatz und einen zweiten Planetenradsatz umfasst, denen ein drittes Schaltelement, ein viertes Schaltelement und ein sechstes Schaltelement zugeordnet sind, wobei bei der zweiten Getriebeschaltgruppe ein zweites Element des ersten Planetenradsatzes mit der Tretkurbelwelle oder mit der fünften Welle als Ausgangswelle des ersten Stufenplanetenradsatzes verbunden ist, wobei ein erstes Element des ersten Planetenradsatzes und ein erstes Element des zweiten Planetenradsatzes mit der Getriebeausgangswelle oder mit der ersten Welle als Eingangswelle des ersten Stufenplanetenradsatzes verbunden sind, wobei ein drittes Element des ersten Planetenradsatzes über das dritte Schaltelement an dem Gehäuse festsetzbar ist, wobei das dritte Element des ersten Planetenradsatzes mit einem zweiten Element des zweiten Planetenradsatzes verbunden ist, wobei ein drittes Element des zweiten Planetenradsatzes über das vierte Schaltelement an dem Gehäuse festsetzbar ist, und wobei zum Verblocken des ersten Planetenradsatzes und des zweiten Planetenradsatzes zwei Elemente der Planetenradsätze über das sechste Schaltelement miteinander verbindbar sind.

Eine nächste Ausführung der Erfindung kann zur Anbindung der zweiten Getriebeschaltgruppe zum Erreichen eines besonders einfachen und kompakten Aufbaus des Tretlagergetriebes vorsehen, dass die zweite Getriebeschaltgruppe einen zweiten Stufenplanetenradsatz umfasst, dem ein drittes Schaltelement, ein viertes Schaltelement und ein sechstes Schaltelement zugeordnet sind, wobei bei der zweiten Getriebeschaltgruppe ein zweites Hohlrad als Element des zweiten Stufenplanetenradsatzes mit der Tretkurbelwelle oder mit der fünften Welle als Ausgangswelle des ersten Stufenplanetenradsatzes verbunden ist, wobei ein zweites Hohlrad als Element des zweiten Stufenplanetenradsatzes mit der Getriebeausgangswelle oder mit der ersten Welle als Eingangswelle des ersten Stufenplanetenradsatzes verbunden ist, wobei der Stufenplanetenradträger als Element des zweiten Stufenplanetenradsatzes über das dritte Schaltelement an dem Gehäuse festsetzbar ist, wobei ein Sonnenrad als Element des zweiten Stufenplanetenradsatzes über das vierte Schaltelement an dem Gehäuse festsetzbar ist, und wobei zum Verblocken des zweiten Stufenplanetenradsatzes zwei Elemente des zweiten Stufenplanetenradsatzes über das sechste Schaltelement miteinander verbindbar sind.

Eine weitere Ausführung der Erfindung kann zur Anbindung der zweiten Getriebeschaltgruppe zum Erreichen eines besonders einfachen und kompakten Aufbaus des Tretlagergetriebes vorsehen, dass die zweite Getriebeschaltgruppe einen ersten Planetenradsatz und einen zweiten Planetenradsatz umfasst, denen ein drittes Schaltelement, ein viertes Schaltelement, ein sechstes Schaltelement und ein siebentes Schaltelement zugeordnet sind, wobei bei der zweiten Getriebeschaltgruppe ein zweites Element des ersten Planetenradsatzes mit der Tretkurbelwelle oder mit der fünften Welle als Ausgangswelle des ersten Stufenplanetenradsatzes verbunden ist, wobei ein erstes Element des ersten Planetenradsatzes mit der Getriebeausgangswelle oder mit der ersten Welle als Eingangswelle des ersten Stufenplanetenradsatzes verbunden sind, wobei ein drittes Element des ersten Planetenradsatzes mit einem zweiten Element des zweiten Planetenradsatzes verbunden ist, wobei ein drittes Element des zweiten Planetenradsatzes über das dritte Schaltelement an dem Gehäuse festsetzbar ist und über das sechste Schaltelement mit der Tretkurbelwelle oder mit der fünften Welle als Ausgangswelle des ersten Stufenplanetenradsatzes verbindbar ist, und wobei ein erstes Element des zweiten Planetenradsatzes über das vierte Schaltelement an dem Gehäuse festsetzbar ist und über das siebente Schaltelement mit der Getriebeausgangswelle oder mit der ersten Welle als Eingangswelle des ersten Stufenplanetenradsatzes verbindbar ist.

Zudem kann eine nächste Ausführung der Erfindung zur Anbindung der zweiten Getriebeschaltgruppe zum Erreichen eines besonders einfachen und kompakten Aufbaus des Tretlagergetriebes vorsehen, dass die zweite Getriebeschaltgruppe eine erste Zweiganggruppe und eine zweite Zweiganggruppe umfasst, wobei der ersten Zweiganggruppe das dritte Schaltelement und das sechste Schaltelement zugeordnet sind und wobei der zweiten Zweiganggruppe das vierte Schaltelement und das siebente Schaltelement zugeordnet sind. Ferner ist vorgesehen, dass bei der ersten Zweiganggruppe ein zweites Element des ersten Planetenradsatzes mit der Tretkurbelwelle oder mit der fünften Welle als Ausgangswelle des ersten Stufenplanetenradsatzes verbunden ist, dass ein drittes Element des ersten Planetenradsatzes mit einem zweiten Element des zweiten Planetenradsatzes verbunden ist, dass ein erstes Element des ersten Planetenradsatzes über das dritte Schaltelement an dem Gehäuse festsetzbar ist, dass zum Verblocken des ersten Planetenradsatzes zwei Elemente des ersten Planetenradsatzes über das sechste Schaltelement miteinander verbindbar sind, dass ein erstes Element des zweiten Planetenradsatzes mit der Getriebeausgangswelle oder mit der ersten Welle als Eingangswelle des ersten Stufenplanetenradsatzes verbunden ist, dass ein drittes Element des zweiten Planetenradsatzes über das vierte Schaltelement an dem Gehäuse festsetzbar ist, und dass zum Verblocken des zweiten Planetenradsatzes zwei Elemente des zweiten Planetenradsatzes über das siebente Schaltelement miteinander verbindbar sind. Es ist neben der Vertauschung der Reihenfolge der beiden Getriebeschaltgruppen auch eine Vertauschung der beiden Zweiganggruppen quasi in Kraftflussrichtung bzw. in axialer Richtung möglich.

Im Rahmen der Erfindung ist bei dem vorgeschlagenen Tretlagergetriebe mit den beiden Getriebeschaltgruppen vorgesehen, dass die vorgesehenen Schaltelemente als Bremsen, Freilaufbremsen, Kupplungen und/oder Freiläufe ausgeführt sein können. Eine vorteilhafte Ausführungsvariante der Erfindung sieht vor, dass das erste Schaltelement, das zweite Schaltelement, das dritte Schaltelement und das vierte Schaltelement jeweils als formschlüssige Bremse ausgeführt sind, und/oder dass das fünfte Schaltelement, das sechste Schaltelement und das siebente Schaltelement jeweils als Freilauf ausgeführt sind.

Die als Bremsen ausgeführten Schaltelemente werden vorzugsweise als formschlüssige Schaltelemente beispielsweise als kostengünstige Brems- bzw. Schaltklauen oder dergleichen zum Beispiel mit einem verzahnten Bremsring und einer korrespondierenden Schaltklinke ausgeführt. Bremsen als Schaltelemente haben den Vorteil, dass diese zum Betätigen von außen ohne weiteres erreichbar sind. Bei den als Freiläufe ausgeführten Kupplungen ist es von Vorteil, wenn die Bremsen z. B. als einseitig wirkende Bremsen ausgeführt sind, um ein Verblocken des Getriebes bei Drehrichtungsumkehr am Antrieb oder am Abtrieb zu verhindern. Vorzugsweise werden als Freiläufe nicht aktiv schaltbare bzw. betätigbare Freiläufe verwendet. Dies hat den Vorteil, dass keine Schaltbetätigung bei den passiven Schaltelementen erforderlich ist. Der nicht betätigbare Freilauf überträgt ein Drehmoment, wenn dieser im Sperrrichtungszustand sperrt. In der entgegengesetzten Drehrichtung wird kein Drehmoment übertragen, da der Freilauf im Überholtriebzustand nicht sperrt. Es ist jedoch denkbar, dass auch aktiv schaltbare Freiläufe oder auch aktiv schaltbare Freilaufbremsen eingesetzt werden.

Eine bevorzugte Ausführung der Erfindung kann vorsehen, dass zumindest einer der vorgesehenen Planetenradsätze als Minus-Planetenradsatz ausgeführt ist, wodurch sich eine besonders bauraumgünstige Anordnung ergibt. Es ist auch denkbar, dass einer der Planetenradsätze als Plus-Planetenradsatz ausgeführt ist.

Ein Minus-Planetenradsatz kann bevorzugt in einen Plus-Planetenradsatz überführt werden, wenn die Planetenradträger- und Hohlradanbindung an diesem Radsatz miteinander vertauscht wird und der Betrag der Standübersetzung um 1 erhöht wird. Ein Minus-Planetenradsatz weist an seinem Planetenradträger verdrehbar gelagerte Planetenräder auf, die mit dem Sonnenrad und dem Hohlrad dieses Planetenradsatzes kämmen, sodass sich das Hohlrad bei festgehaltenem Planetenradträger und drehendem Sonnenrad in zur Sonnenraddrehrichtung entgegengesetzter Richtung dreht. Ein Plus-Planetenradsatz weist an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, sodass sich das Hohlrad bei festgehaltenem Planetenradträger und drehendem Sonnenrad in zur Sonnenraddrehrichtung gleicher Drehrichtung dreht.

Dies bedeutet für den Fachmann, dass bei den als Minus-Planetenradsatz ausgeführten Einzelradsätzen ein erstes Element bzw. Radsatzelement als Sonnenrad, ein zweites Element als Planetenradträger bzw. Steg und ein drittes Element als Hohlrad ausgeführt sind. Ferner bedeutet dies, dass bei einem als Plus-Planetenradsatz ausgeführten Einzelradsatz das erste Element als Sonnenrad, das zweite Element als Hohlrad und das dritte Element als Planetenradträger bzw. Steg ausgeführt sind.

Um die Ansteuerung des vorgeschlagenen Tretlagergetriebes weiter zu optimieren, ist vorgesehen, dass zumindest ein Drehmomentsensor oder dergleichen an dem Antrieb und/oder an dem Abtrieb vorgesehen ist.

Um den Antrieb bei dem vorgeschlagenen Tretlagergetriebe elektrisch zu unterstützen, kann zumindest eine elektrische Maschine oder dergleichen mit dem Antrieb bzw. mit der Tretkurbelwelle oder Getriebeeingangswelle und/oder mit dem Abtrieb bzw. mit der Getriebeausgangswelle verbunden oder verbindbar sein bzw. fest oder lösbar angekoppelt sein. Vorzugsweise kann die elektrische Maschine achsparallel zur Tretkurbelwelle bzw. Getriebeeingangswelle angeordnet sein, während die Planetenradsätze koaxial zur Tretkurbelwelle bzw. Getriebeeingangswelle angeordnet sind.

Ein weiterer Aspekt der vorliegenden Erfindung beansprucht ein Fahrrad oder Pedelec mit dem vorbeschriebenen Tretlagergetriebe. Hieraus ergeben sich die bereits beschriebenen Vorteile und weitere Vorteile.

Nachfolgend wird die vorliegende Erfindung anhand der Zeichnungen weiter erläutert.

Es zeigen:
Figur 1 eine schematische Prinzipansicht eines erfindungsgemäßen Tretlagergetriebes an einem Fahrrad oder einem Pedelec mit einer einer zweiten Getriebeschaltgruppe vorgeschalteten ersten Getriebeschaltgruppe mit einem Stufenplanetenradsatz mit einer ersten Verblockungsvariante;
Figur 2 eine schematische Prinzipansicht des erfindungsgemäßen Tretlagergetriebes mit der der zweiten Getriebeschaltgruppe nachgeschalteten ersten Getriebeschaltgruppe mit dem Stufenplanetenradsatz mit einer ersten Verblockungsvariante;
Figur 3 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer zweiten Verblockungsvariante;
Figur 4 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer dritten Verblockungsvariante;
Figur 5 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer vierten Verblockungsvariante;
Figur 6 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer fünften Verblockungsvariante;
Figur 7 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer sechsten Verblockungsvariante;
Figur 8 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer siebenten Verblockungsvariante;
Figur 9 eine schematische Prinzipansicht des erfindungsgemäßen Tretlagergetriebes mit der der zweiten Getriebeschaltgruppe vorgeschalteten ersten Getriebeschaltgruppe mit dem Stufenplanetenradsatz mit einer achten Verblockungsvariante;
Figur 10 ein Schaltschema mit drei schaltbaren Gängen der ersten Getriebeschaltgruppe bei dem Tretlagergetriebe;
Figur 11 eine schematische Prinzipansicht des Tretlagergetriebes mit einer Ausführung der der ersten Getriebeschaltgruppe als Dreiganggetriebe vorgeschalteten zweiten Getriebeschaltgruppe als Zweiganggetriebe;
Figur 12 ein Schaltschema des sechsgängigen Tretlagergetriebes gemäß der Figur 11;
Figur 13 eine schematische Prinzipansicht des Tretlagergetriebes mit einer Ausführung der der ersten Getriebeschaltgruppe als Dreiganggetriebe nachgeschalteten zweiten Getriebeschaltgruppe mit zwei Planetenradsätzen;
Figur 14 eine schematische Prinzipansicht des Tretlagergetriebes mit einer Ausführung der der ersten Getriebeschaltgruppe als Dreiganggetriebe nachgeschalteten zweiten Getriebeschaltgruppe mit einem zweiten Stufenplanetenradsatz;
Figur 15 ein Schaltschema des neungängigen Tretlagergetriebes gemäß der Figuren 13 und 14;
Figur 16 eine schematische Prinzipansicht des Tretlagergetriebes mit einer Ausführung der der ersten Getriebeschaltgruppe als Dreiganggetriebe nachgeschalteten zweiten Getriebeschaltgruppe mit zwei Planetenradsätzen;
Figur 17 ein Schaltschema des zehngängigen Tretlagergetriebes gemäß der Figur 17;
Figur 18 eine schematische Prinzipansicht des Tretlagergetriebes mit einer Ausführung der der ersten Getriebeschaltgruppe als Dreiganggetriebe nachgeschalteten zweiten Getriebeschaltgruppe mit zwei Zweiganggruppen;
Figur 19 ein Schaltschema des zwölfgängigen Tretlagergetriebes gemäß der Figur 18;
Figur 20 eine schematische Prinzipansicht des Tretlagergetriebes gemäß Figur 1 mit einem beispielhaft angedeuteten Drehmomentsensor am Antrieb;
Figur 21 eine schematische Prinzipansicht des Tretlagergetriebes gemäß Figur 20 mit einer beispielhaft am Antrieb angeordneten elektrischen Maschine;
Figur 22 eine schematische Prinzipansicht des Tretlagergetriebes gemäß Figur 20 mit einer beispielhaft am Abtrieb angeordneten elektrischen Maschine; und
Figur 23 eine schematische Prinzipansicht des Tretlagergetriebes gemäß Figur 20 mit einem Freilauf vor der Tretkurbelwelle.

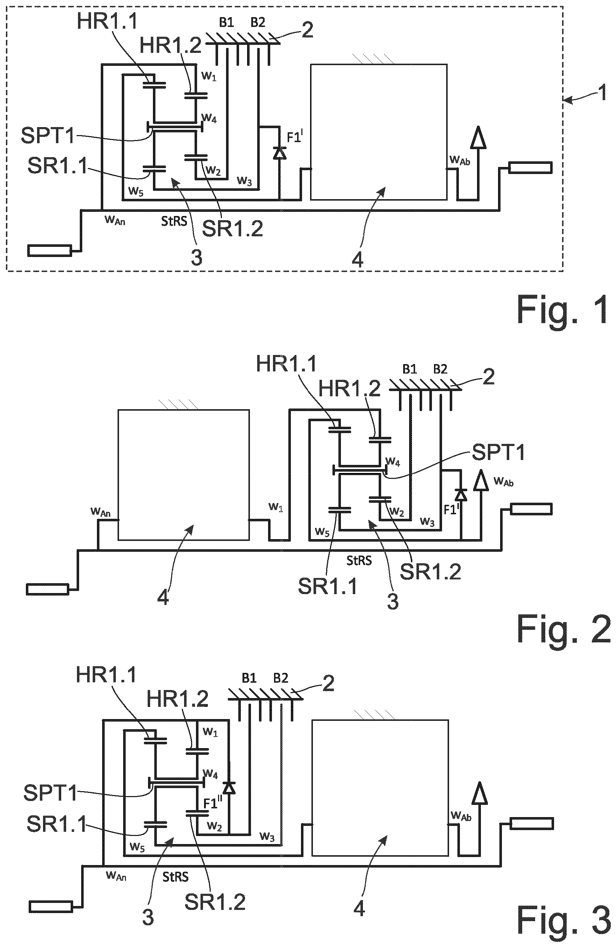

In den Figuren 1 bis 23 sind verschiedene Ausführungsvarianten und Ausführungen bzw. Schaltschemen eines erfindungsgemäßen Tretlagergetriebes in Planetenbauweise lediglich beispielhaft dargestellt. Figur 1 zeigt exemplarisch ein nur schematisch angedeutetes Fahrrad oder Pedelec 1 mit dem Tretlagergetriebe.

Das Tretlagergetriebe ist in einem Gehäuse bzw. Tretlagergehäuse 2 mit einer Tretkurbel mit Pedalen als Tretkurbelwelle WAn dargestellt, wobei die Tretkurbelwelle WAn eingangsseitig mit einer der Getriebeschaltgruppen 3, 4 verbunden ist. Ferner umfasst das Tretlagergetriebe eine Getriebeausgangswelle WAb als Abtrieb mit einem nicht weiter dargestellten Ketten- bzw. Riemenrad, welches ausgangsseitig mit einer der Getriebeschaltgruppen 3, 4 verbunden ist. Das Tretlagergetriebe umfasst eine mehrgängige erste Getriebeschaltgruppe 3 und eine mehrgängige zweite Getriebeschaltgruppe 4, wobei die erste Getriebeschaltgruppe 3 einen zweistufigen Stufenplanetenradsatzes StRS1 aufweist, dem ein erstes Schaltelemente B1 als formschlüssige Bremse, ein zweites Schaltelement B2 als formschlüssige Bremse und ein fünftes Schaltelement F1^{I}, F1^{II}, F1^{III}, F1^{1V}, F1^{V}, F1^{VI}, F1^{VII}, F1^{VIII} als Freilauf zugeordnet sind. Die beiden Getriebeschaltgruppen 3, 4 bilden quasi zwei Teilgetriebe, die in Bezug auf die Kraftflussrichtung zwischen Tretkurbelwelle WAn und Getriebeausgangswelle WAb in beliebiger Reihenfolge miteinander verschaltet werden können.

Unabhängig von den jeweiligen Ausführungsvarianten ist bei dem Tretlagergetriebe vorgesehen, dass eine erste Welle W1 als Eingangswelle des ersten Stufenplanetenradsatzes StRS1 mit einem zweiten Hohlrad HR1.2 als Element des ersten Stufenplanetenradsatzes StRS1 verbunden ist, dass eine fünfte Welle W5 als Ausgangswelle des ersten Stufenplanetenradsatzes StRS1 mit einem ersten Hohlrad HR1.1 als Element des ersten Stufenplanetenradsatz StRS1 verbunden ist, dass ein zweites Sonnenrad SR1.2 als Element des ersten Stufenplanetenradsatz StRS1 über das erste Schaltelement B1 an einem Gehäuse 2 festsetzbar ist, dass ein erstes Sonnenrad SR1.1 als Element des ersten Stufenplanetenradsatzes StRS1 über das zweite Schaltelement B2 an dem Gehäuse 2 festsetzbar ist, dass ein Stufenplanetenradträger SPT1 als Element des ersten Stufenplanetenradsatzes StRS1 drehbar gelagert ist, und dass zum Verblocken des Stufenplanetenradsatzes StRS1 zwei Elemente des ersten Stufenplanetenradsatzes StRS1 über das fünfte Schaltelement F1^{I}, F1^{II}, F1^{III}, F1^{1V}, F1^{V}, F1^{VI}, F1^{VII}, F1^{VIII} miteinander verbindbar sind.

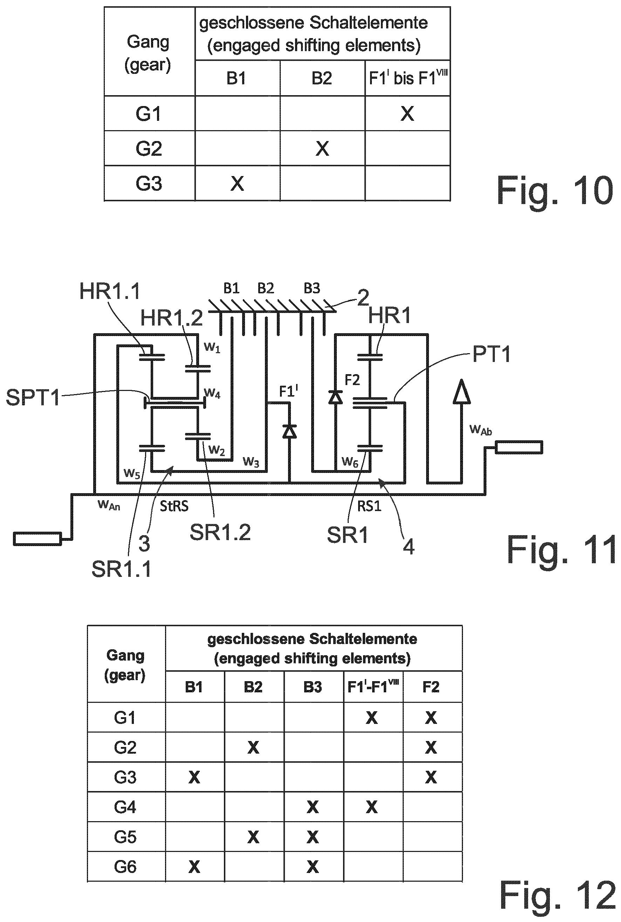

In den Figuren 11, 13, 14, 16 und 18 sind die vorgesehenen Planetenradsätze RS1, RS2 jeweils als bauraumgünstige Minus-Planetenradsätze ausgeführt. Hierbei ist vorgesehen, dass jeweils als erstes Element ein Sonnenrad SR1, SR2 als zweites Element ein Steg oder Planetenradträger PT1, PT2 und als drittes Element ein Hohlrad HR1, HR2 bei den Planetenradsätzen RS1, RS2 vorgesehen sind.

In Figur 1 ist eine Ausführungsvariante des Tretlagergetriebes dargestellt, bei der die erste Getriebeschaltgruppe 3 der zweiten Getriebeschaltgruppe 4 vorgeschaltet ist. Im Detail ist bei der ersten Ausführungsvariante gemäß Figur 1 vorgesehen, dass die erste Welle W1 als Eingangswelle des ersten Stufenplanetenradsatzes StRS1 der ersten Getriebeschaltgruppe 3 mit der Tretkurbelwelle WAn verbunden oder mit dieser einteilig ausgebildet ist, dass die erste Welle W1 mit dem zweiten Hohlrad HR1.2 des ersten Stufenplanetenradsatzes StRS1 verbunden ist, dass das erste Hohlrad HR1.1 des ersten Stufenplanetenradsatzes StRS1 über die fünfte Welle W5 eingangsseitig mit der zweiten Getriebeschaltgruppe 4 verbunden ist, dass der Stufenplanetenradträger SPT1 des ersten Stufenplanetenradsatzes StRS1 über eine vierte Welle W4 drehbar gelagert ist, dass das zweite Sonnenrad SR1.2 des ersten Stufenplanetenradsatzes StRS1 über eine zweite Welle W2 bei geschlossenem ersten Schaltelemente B1 an dem Gehäuse 2 festsetzbar ist, dass das erste Sonnenrad SR1.1 des ersten Stufenplanetenradsatzes StRS1 über eine dritte Welle W3 bei geschlossenem zweiten Schaltelement B2 an dem Gehäuse 2 festsetzbar ist, und dass zum Verblocken des ersten Stufenplanetenradsatzes StRS1 als erste Verblockungsvariante das erste Sonnenrad SR1.1 bei gesperrtem fünften Schaltelement F1^{I} in einer ersten Anordnungsvariante des fünften Schaltelements F1^{I} mit dem ersten Hohlrad HR1.1 verbindbar sind.

In Figur 2 ist eine Ausführungsvariante des Tretlagergetriebes dargestellt, bei der die erste Getriebeschaltgruppe 3 der zweiten Getriebeschaltgruppe 4 nachgeschaltet ist. Im Detail ist bei der Ausführungsvariante gemäß Figur 2 vorgesehen, dass die erste Welle W1 als Eingangswelle des ersten Stufenplanetenradsatzes StRS1 ausgangsseitig mit der zweiten Getriebeschaltgruppe 4 verbunden ist, dass die erste Welle W1 mit dem zweiten Hohlrad HR1.2 des ersten Stufenplanetenradsatzes StRS1 verbunden ist, dass das erste Hohlrad HR1.1 des ersten Stufenplanetenradsatzes StRS1 mit der fünften Welle W5 verbunden ist, dass die fünfte Welle W5 als Ausgangswelle der ersten Getriebeschaltgruppe mit der Getriebeausgangswelle WAb verbunden oder mit dieser einteilig ausgebildet ist, dass der Stufenplanetenradträger SPT1 des ersten Stufenplanetenradsatzes StRS1 über die vierte Welle W4 drehbar gelagert ist, dass das zweite Sonnenrad SR1.2 des ersten Stufenplanetenradsatzes StRS1 über die zweite Welle W2 bei geschlossenem ersten Schaltelemente B1 an dem Gehäuse 2 festsetzbar ist, dass das erste Sonnenrad SR1.1 des ersten Stufenplanetenradsatzes StRS1 über die dritte Welle W3 bei geschlossenem zweiten Schaltelement B2 an dem Gehäuse 2 festsetzbar ist, und dass zum Verblocken des ersten Stufenplanetenradsatzes StRS1 als erste Verblockungsvariante das erste Sonnenrad SR1.1 bei gesperrtem fünften Schaltelement F1^{I} in einer ersten Anordnungsvariante des fünften Schaltelements F1^{I} mit dem ersten Hohlrad HR1.1 verbindbar sind.

In Figur 3 ist eine zweite Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der zweiten Verblockungsvariante wird bei geschlossenem fünften Schaltelements F1^{II} in einer zweiten Anordnungsvariante das zweite Sonnenrad SR1.2 mit dem zweiten Hohlrad HR1.2 des ersten Stufenplanetenradsatzes StR1 verbunden.

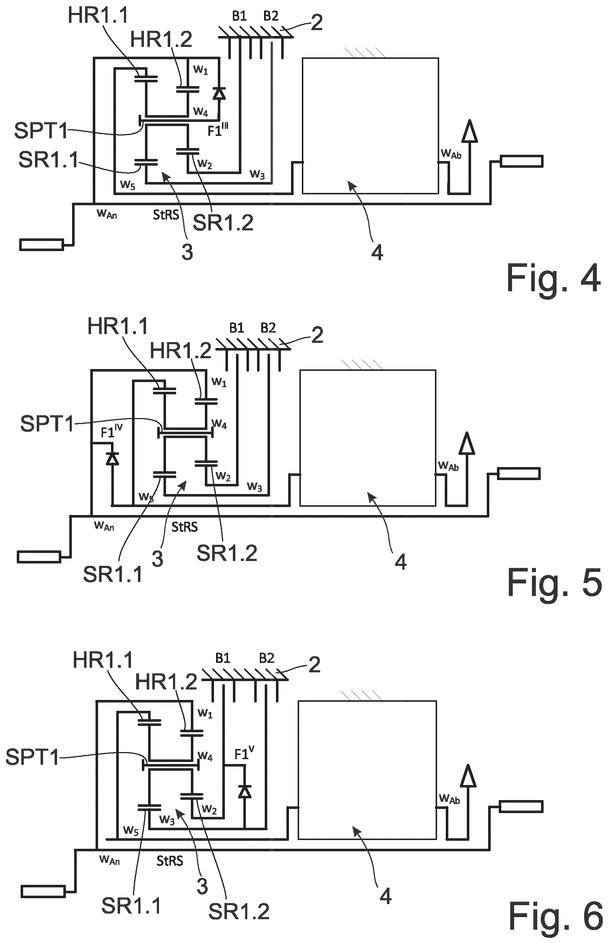

In Figur 4 ist eine dritte Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der dritten Verblockungsvariante wird bei geschlossenem fünften Schaltelements F1^{III} in einer dritten Anordnungsvariante der Stufenplanetenradträger SPT1 mit dem zweiten Hohlrad HR1.2 des ersten Stufenplanetenradsatzes StR1 verbunden.

In Figur 5 ist eine vierte Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der vierten Verblockungsvariante wird bei geschlossenem fünften Schaltelements F1^{IV} in einer vierten Anordnungsvariante das erste Hohlrad HR1.1 mit dem zweiten Hohlrad HR1.2 des ersten Stufenplanetenradsatzes StR1 verbunden.

In Figur 6 ist eine fünfte Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der fünften Verblockungsvariante wird bei geschlossenem fünften Schaltelements F1^{V} in einer fünften Anordnungsvariante das erste Sonnenrad SR1.1 mit dem zweiten Sonnenrad SR1.2 des ersten Stufenplanetenradsatzes StR1 verbunden.

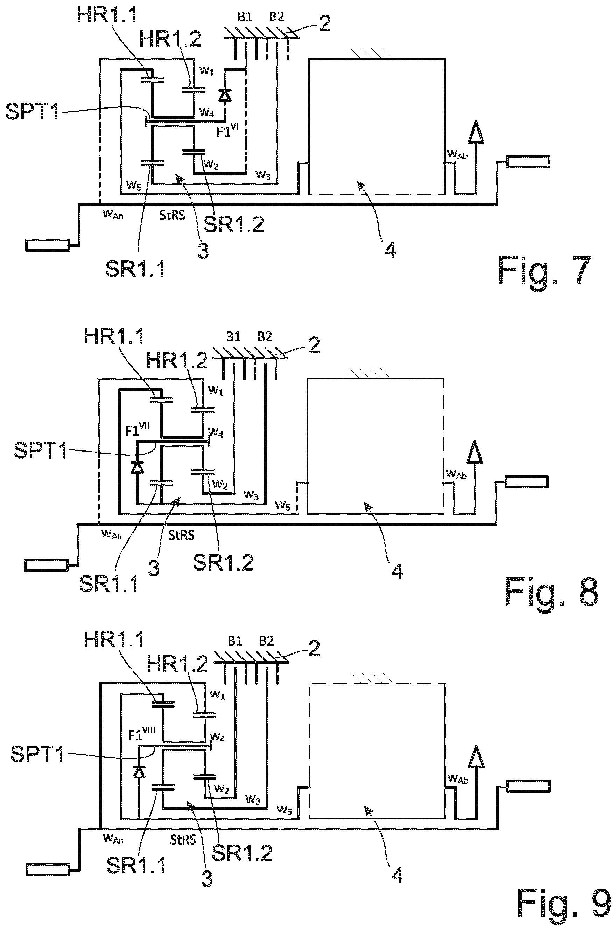

In Figur 7 ist eine sechste Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der sechsten Verblockungsvariante wird bei geschlossenem fünften Schaltelements F1^{VI} in einer sechsten Anordnungsvariante das zweite Sonnenrad SR1.2 mit dem Stufenplanetenradträger SPT1 des ersten Stufenplanetenradsatzes StR1 verbunden.

In Figur 8 ist eine siebente Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der siebenten Verblockungsvariante wird bei geschlossenem fünften Schaltelements F1^{VII} in einer siebenten Anordnungsvariante das erste Sonnenrad SR1.1 mit dem Stufenplanetenradträger SPT1 des ersten Stufenplanetenradsatzes StR1 verbunden.

In Figur 9 ist eine achte Verblockungsvariante des ersten Stufenplanetenradsatzes StRS1 bei dem der zweiten Getriebeschaltgruppe 4 vorgeschalteten ersten Getriebeschaltgruppe 3 dargestellt. Im Rahmen der achten Verblockungsvariante wird bei geschlossenem fünften Schaltelements F1^{VIII} in einer achten Anordnungsvariante das erste Hohlrad HR1.1 mit dem Stufenplanetenradträger SPT1 des ersten Stufenplanetenradsatzes StR1 verbunden.

In Figur 10 ist ein Schaltschema für die erste Getriebeschaltgruppe 3 als Dreiganggetriebe dargestellt. Hieraus ergibt sich, dass durch die erste Getriebeschaltgruppe 3 drei Gänge G1, G2, G3 realisierbar sind. In dem Schaltschema sind die für den jeweiligen Gang G1, G2, G3 verwendeten Schaltelemente B1, B2, F1^{I}, F1^{II}, F1^{III}, F1^{1V}, F1^{V}, F1^{VI}, F1^{VII}, F1^{VIII} angegeben. Hierbei bedeutet ein X bei dem Freilauf F1^{I}, F1^{II}, F1^{III}, F1^{IV}, F1^{V}, F1^{VI}, F1^{VII}, F1^{VIII} als Schaltelement in dem Schaltschema, dass der Freilauf sperrt. Dies funktioniert selbsttätig ohne äußere Betätigung. Ferner bedeutet ein X bei einer Bremse B1, B2 als Schaltelement in dem Schaltschema, dass die Bremse B1, B2 geschlossen ist. Dies funktioniert über eine geeignete Aktuatorik. Ein leeres Feld bei dem Freilauf F1^{I}, F1^{II}, F1^{III}, F1^{IV}, F1^{V}, F1^{VI}, F1^{VII}, F1^{VIII} bedeutet, dass dieser nicht sperrt. Ein leeres Feld bei den Bremsen B1, B2 bedeutet, dass diese geöffnet sind.

Im Einzelnen ergibt sich aus dem Schaltschema gemäß Figur 10, dass zum Realisieren oder Schalten eines ersten Ganges G1 das erste als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines zweiten Ganges G2 das zweite als Bremse ausgeführte Schaltelement B2 geschlossen ist, und/oder dass zum Realisieren eines dritten Ganges G3 das erste als Bremse ausgeführte Schaltelement B1 geschlossen ist.

In Figur 11 ist das Tretlagergetriebe beispielhaft mit einer ersten Getriebeschaltgruppe 3 als Dreiganggetriebegruppe und mit einer zweiten Getriebeschaltgruppe 4 als Zweiganggetriebegruppe mit einem ersten Planetenradsatzes RS1 dargestellt, dem ein drittes Schaltelement B3 als Bremse und ein sechstes Schaltelement F2 als Freilauf zugeordnet sind. Im Detail ist zur Anbindung der zweiten Getriebeschaltgruppe 4 an die erste Getriebeschaltgruppe 3 vorgesehen, dass der Planetenradträger PT1 des ersten Planetenradsatzes RS1 mit der fünften Welle W5 als Ausgangswelle des ersten Stufenplanetenradsatzes StRS1 verbunden ist, dass das Sonnenrad SR1 des ersten Planetenradsatzes RS1 über eine sechste Welle W6 bei geschlossenem dritten Schaltelement B3 an dem Gehäuse 2 festsetzbar ist, dass das Hohlrad HR1 des ersten Planetenradsatzes RS1 mit der Getriebeausgangswelle WAb verbunden ist, und dass zum Verblocken des ersten Planetenradsatzes RS1 bei einer ersten Verblockungsvariante das Hohlrad HR1 bei gesperrtem sechsten Schaltelement F2 mit dem Sonnenrad des ersten Planetenradsatzes RS1 verbindbar ist. Die beiden weiteren Verblockungsvarianten werden durch die weiteren Verbindungsmöglichkeiten der Elemente des ersten Planetenradsatzes RS1 realisiert. Die Anbindungen des ersten Stufenplanetenradsatzes StRS1 bei der ersten Getriebeschaltgruppe 3 wurden oben bereits beschrieben.

In Figur 12 ist ein Schaltschema für das in Figur 11 gezeigte Tretlagergetriebe mit der ersten Getriebeschaltgruppe 3 als Dreiganggetriebe und mit der zweiten Getriebeschaltgruppe 4 als Zweiganggetriebe dargestellt. Hieraus ergibt sich, dass 4 x 2 also sechs Gänge G1, G2, G3, G4, G5, G6 realisierbar sind. In dem Schaltschema sind die für den jeweiligen Gang G1, G2, G3, G4, G5, G6 verwendeten Schaltelemente B1, B2, B3, F1^{I}, F1^{II}, F1^{III}, F1^{1V}, F1^{V}, F1^{VI}, F1^{VII}, F1^{VIII}, F2 angegeben. Hierbei bedeutet ein X bei den Freiläufen F1^{I}, F1^{II}, F1^{III}, F1^{IV}, F1^{V}, F1^{VI}, F1^{VII}, F1^{VIII} , F2 als Schaltelemente in dem Schaltschema, dass die Freiläufe sperren. Dies funktioniert selbsttätig ohne äußere Betätigung. Ferner bedeutet ein X bei einer Bremse B1, B2, B3 als Schaltelement in dem Schaltschema, dass die Bremsen B1, B2, B3 geschlossen sind. Dies funktioniert über eine geeignete Aktuatorik. Ein leeres Feld bei den Freiläufen F1^{I}, F1^{II}, F1^{III}, F1^{IV}, F1^{V}, F1^{VI}, F1^{VII}, F1^{VIII}, F2 bedeutet, dass diese nicht sperren. Ein leeres Feld bei den Bremsen B1, B2, B3 bedeutet, dass diese geöffnet sind.

Im Einzelnen ergibt sich aus dem Schaltschema gemäß Figur 12, dass zum Realisieren oder Schalten eines ersten Ganges G1 das fünfte als Freilauf ausgeführte Schaltelement F1^{I}, F1^{II}, F1^{III}, F1^{IV}, F1^{V}, F1^{VI}, F1^{VII}, F1^{VIII} und das sechste als Freilauf ausgeführte Schaltelement F2 sperren, dass zum Realisieren eines zweiten Ganges G2 das zweite als Bremse ausgeführte Schaltelement B2 geschlossen ist und dass sechste als Freilauf ausgeführte Schaltelement F2 sperrt, dass zum Realisieren eines dritten Ganges G3 das erste als Bremse ausgeführte Schaltelement B1 geschlossen ist und das sechste als Freilauf ausgeführte Schaltelement F2 sperrt, dass zum Realisieren eines vierten Ganges G4 das dritte als Bremse ausgeführte Schaltelement B3 geschlossen ist und das fünfte als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines fünften Ganges G5 das zweite als Bremse ausgeführte Schaltelement B2 und das dritte als Bremse ausgeführte Schaltelement B3 geschlossen sind, und/oder dass zum Realisieren eines sechsten Ganges G6 das erste als Bremse ausgeführte Schaltelement B1 und das dritte als Bremse ausgeführte Schaltelement B3 geschlossen sind.

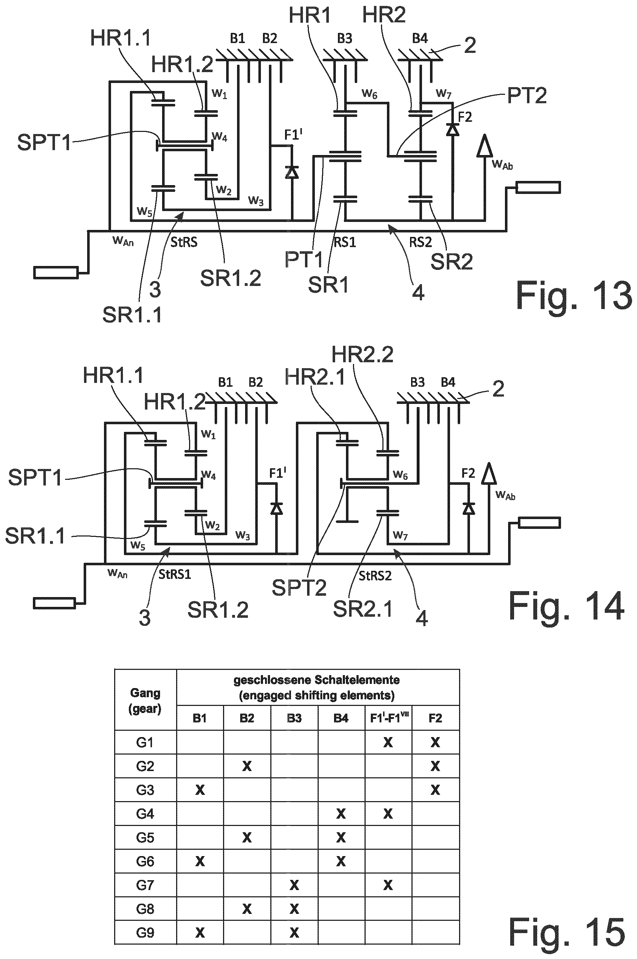

In Figur 13 ist das Tretlagergetriebe beispielhaft mit einer ersten Getriebeschaltgruppe 3 als Dreiganggetriebegruppe und mit einer zweiten Getriebeschaltgruppe 4 als Dreiganggetriebegruppe mit einem ersten Planetenradsatzes RS1 und einem zweiten Planetenradsatz RS2 dargestellt, denen ein drittes Schaltelement B3 als Bremse, ein viertes Schaltelement B4 als Bremse und ein sechstes Schaltelement F2 als Freilauf zugeordnet sind. Im Detail ist zur Anbindung der zweiten Getriebeschaltgruppe 4 an die erste Getriebeschaltgruppe 3 vorgesehen, dass der Planetenradträger PT1 des ersten Planetenradsatzes RS1 mit der fünften Welle W5 als Ausgangswelle des ersten Stufenplanetenradsatzes StRS1verbunden ist, dass das Sonnenrad SR1 des ersten Planetenradsatzes RS1 und das Sonnenrad SR2 des zweiten Planetenradsatzes RS2 gemeinsam mit der Getriebeausgangswelle WAb verbunden sind, dass das Hohlrad HR1 des ersten Planetenradsatzes RS1 über eine sechste Welle W6 bei geschlossenem dritten Schaltelement B3 an dem Gehäuse 2 festsetzbar ist, dass das Hohlrad HR1 des ersten Planetenradsatzes RS1 über die sechste Welle W6 fest mit dem Planetenradträger PT2 des zweiten Planetenradsatzes RS2 verbunden ist, dass das Hohlrad HR2 des zweiten Planetenradsatzes RS2 über eine siebente Welle W7 bei geschlossenem vierten Schaltelement B4 an dem Gehäuse 2 festsetzbar ist, und dass zum Verblocken des ersten Planetenradsatzes RS1 und des zweiten Planetenradsatzes RS2 im Rahmen einer ersten Verblockungsvariante die mit den beiden Sonnenrädern SR1 und SR2 der beiden Planetenradsätze RS1 und RS2 verbundene Getriebeausgangswelle WAb bei gesperrtem sechsten Schaltelement F2 in einer ersten Anordnungsvariante mit der mit dem Hohlrad HR2 des zweiten Planetenradsatzes RS2 verbundene siebente Welle W7 verbindbar ist. Zum Realisieren der weiteren Verblockungsvarianten werden weitere der sechs Elemente der beiden Planetenradsätze RS1, RS2 über das sechste Schaltelement F2 miteinander verbunden. Die Anbindungen des ersten Stufenplanetenradsatzes StRS1 bei der ersten Getriebeschaltgruppe 3 wurden oben bereits beschrieben.

In Figur 14 ist das Tretlagergetriebe beispielhaft mit einer ersten Getriebeschaltgruppe 3 als Dreiganggetriebegruppe und mit einer zweiten Getriebeschaltgruppe 4 als Dreiganggetriebegruppe mit einem zweiten Stufenplanetenradsatzes StRS2 dargestellt, dem ein drittes Schaltelement B3 als Bremse, ein viertes Schaltelement B4 als Bremse und ein sechstes Schaltelement F2 als Freilauf zugeordnet sind. Im Detail ist zur Anbindung der zweiten Getriebeschaltgruppe 4 an die erste Getriebeschaltgruppe 3 vorgesehen, dass das zweite Hohlrad HR2.2 als Element des zweiten Stufenplanetenradsatzes StRS2 mit der fünften Welle W5 als Ausgangswelle des ersten Stufenplanetenradsatzes StRS1 verbunden ist, dass das erste Hohlrad HR2.1 als Element des zweiten Stufenplanetenradsatzes StRS2 mit der Getriebeausgangswelle WAb verbunden ist, dass der Stufenplanetenradträger SPT2 als Element des zweiten Stufenplanetenradsatzes StRS2 über eine sechste Welle W6 bei geschlossenem dritten Schaltelement B3 an dem Gehäuse 2 festsetzbar ist, dass das Sonnenrad SR2.1 als Element des zweiten Stufenplanetenradsatzes StRS2 über eine siebente Welle W7 bei geschlossenem vierten Schaltelement B4 an dem Gehäuse 2 festsetzbar ist, und dass zum Verblocken des zweiten Stufenplanetenradsatzes StRS2 im Rahmen einer ersten Verblockungsvariante das Sonnenrad SR2.1 bei gesperrtem sechsten Schaltelement F2 in einer ersten Anordnungsvariante mit dem ersten Hohlrad HR2.1 des zweiten Stufenplanetenradsatzes StRS2 verbindbar ist. Die weiteren Verblockungsvarianten werden durch die weiteren Verbindungsmöglichkeiten der vier Elemente des zweiten Stufenplanetenradsatzes StRS2 realisiert. Die Anbindungen des ersten Stufenplanetenradsatzes StRS1 bei der ersten Getriebeschaltgruppe 3 wurden oben bereits beschrieben.

In Figur 15 ist ein Schaltschema für die in Figur 13 und 14 gezeigten Tretlagergetriebe mit der ersten Getriebeschaltgruppe 3 als Dreiganggetriebe und mit der zweiten Getriebeschaltgruppe 4 als Dreiganggetriebe dargestellt. Hieraus ergibt sich, dass 3 x 3 also neun Gänge G1, G2, G3, G4, G5, G6, G7, G8, G9 realisierbar sind. In dem Schaltschema sind die für den jeweiligen Gang G1, G2, G3, G4, G5, G6, G7, G8, G9 verwendeten Schaltelemente B1, B2, B3, B4, F1^{I}, F1^{II}, F1^{III}, F1^{IV}, F1^{V}, F1^{VI}, F1^{VII}, F1^{VIII}, F2 angegeben. Hierbei bedeutet ein X bei den Freiläufen F1^{I}, F1^{II}, F1^{III}, F1^{IV}, F1^{V}, F1^{VI}, F1^{VII}, F1^{VIII}, F2 als Schaltelemente in dem Schaltschema, dass die Freiläufe sperren. Dies funktioniert selbsttätig ohne äußere Betätigung. Ferner bedeutet ein X bei einer Bremse B1, B2, B3, B4 als Schaltelement in dem Schaltschema, dass die Bremsen B1, B2, B3, B4 geschlossen sind. Dies funktioniert über eine geeignete Aktuatorik. Ein leeres Feld bei den Freiläufen F1^{I}, F1^{II}, F1^{III}, F1^{IV}, F1^{V}, F1^{VI}, F1^{VII}, F1^{VIII}, F2 bedeutet, dass diese nicht sperren. Ein leeres Feld bei den Bremsen B1, B2, B3, B4 bedeutet, dass diese geöffnet sind.

Im Einzelnen ergibt sich aus dem Schaltschema gemäß Figur 15, dass zum Realisieren oder Schalten eines ersten Ganges G1 das fünfte als Freilauf ausgeführte Schaltelement F1^{I}, F1^{II}, F1^{III}, F1^{IV}, F1^{V}, F1^{VI}, F1^{VII}, F1^{VIII} und das sechste als Freilauf ausgeführte Schaltelement F2 sperren, dass zum Realisieren eines zweiten Ganges G2 das zweite als Bremse ausgeführte Schaltelement B2 geschlossen ist und das sechste als Freilauf ausgeführte Schaltelement F2 sperrt, dass zum Realisieren eines dritten Ganges G3 das erste als Bremse ausgeführte Schaltelement B1 geschlossen ist und das sechste als Freilauf ausgeführte Schaltelement F2 sperrt, dass zum Realisieren eines vierten Ganges G4 das vierte als Bremse ausgeführte Schaltelement B4 geschlossen ist und das fünfte als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines fünften Ganges G5 das zweite als Bremse ausgeführte Schaltelement B2 und das vierte als Bremse ausgeführte Schaltelement B4 geschlossen sind, dass zum Realisieren eines sechsten Ganges G6 das erste als Bremse ausgeführte Schaltelement B1 und das vierte als Bremse ausgeführte Schaltelement B4 geschlossen sind, dass zum Realisieren eines siebenten Ganges G7 das dritte als Bremse ausgeführte Schaltelement B3 geschlossen ist und das fünfte als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines achten Ganges G8 das zweite als Bremse ausgeführte Schaltelement B2 und das dritte als Bremse ausgeführte Schaltelement B3 geschlossen sind, und/oder dass zum Realisieren eines neunten Ganges G9 das erste als Bremse ausgeführte Schaltelement B1 und das dritte als Bremse ausgeführte Schaltelement B3 geschlossen sind.

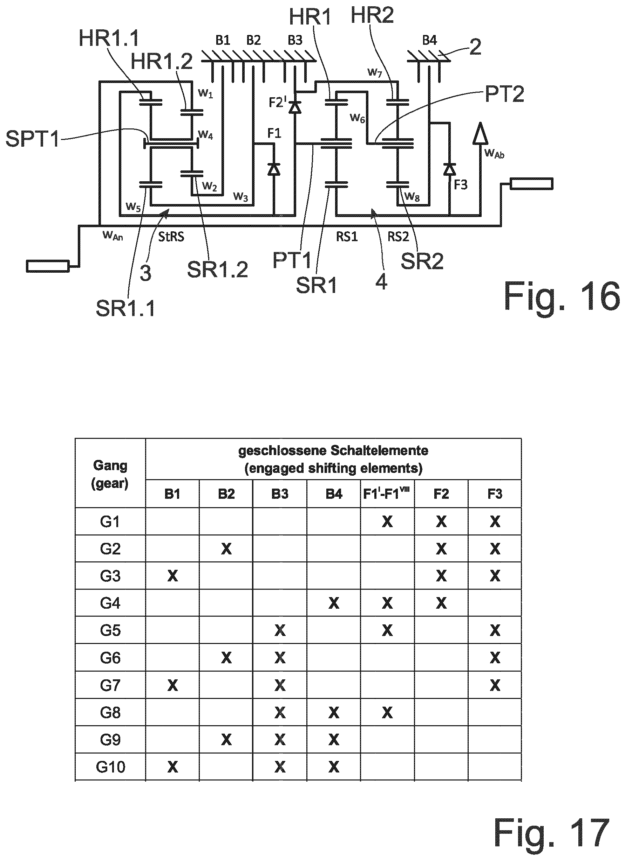

In Figur 16 ist das Tretlagergetriebe beispielhaft mit einer ersten Getriebeschaltgruppe 3 als Dreiganggetriebegruppe und mit einer zweiten Getriebeschaltgruppe 4 mit einem ersten Planetenradsatzes RS1 und einem zweiten Planetenradsatz RS2 dargestellt, denen ein drittes Schaltelement B3 als Bremse, ein viertes Schaltelement B4 als Bremse, ein sechstes Schaltelement F2 als Freilauf und ein siebentes Schaltelement F3 als Freilauf zugeordnet sind. Im Detail ist zur Anbindung der zweiten Getriebeschaltgruppe 4 an die erste Getriebeschaltgruppe 3 vorgesehen, dass der Planetenradträger PT1 des ersten Planetenradsatzes RS1 mit der fünften Welle W5 als Ausgangswelle des ersten Stufenplanetenradsatzes StRS1 verbunden ist, dass das Sonnenrad SR1 des ersten Planetenradsatzes RS1 mit der Getriebeausgangswelle WAb verbunden sind, dass das Hohlrad HR1 des ersten Planetenradsatzes RS1 über eine sechste Welle W6 mit dem Planetenradträger PT2 des zweiten Planetenradsatzes RS2 fest verbunden ist, dass das Hohlrad HR2 des zweiten Planetenradsatzes RS2 über eine siebente Welle W7 bei geschlossenem dritten Schaltelement B3 an dem Gehäuse 2 festsetzbar ist und bei gesperrtem sechsten Schaltelement F2 mit der fünften Welle W5 als Ausgangswelle des ersten Stufenplanetenradsatzes StRS1 verbindbar ist, und dass das Sonnenrad SR2 des zweiten Planetenradsatzes RS2 über eine achte Welle W8 bei geschlossenem vierten Schaltelement B4 an dem Gehäuse 2 festsetzbar ist und bei gesperrtem siebenten Schaltelement F3 mit der Getriebeausgangswelle WAb verbindbar ist. Die Anbindungen des ersten Stufenplanetenradsatzes StRS1 bei der ersten Getriebeschaltgruppe 3 wurden oben bereits beschrieben.

In Figur 17 ist ein Schaltschema für das in Figur 16 gezeigte Tretlagergetriebe mit der ersten Getriebeschaltgruppe 3 als Dreiganggetriebe und mit der zweiten Getriebeschaltgruppe 4 dargestellt. Hieraus ergibt sich, dass zehn Gänge G1, G2, G3, G4, G5, G6, G7, G8, G9, G10 realisierbar sind. In dem Schaltschema sind die für den jeweiligen Gang G1, G2, G3, G4, G5, G6, G7, G8, G9, G10 verwendeten Schaltelemente B1, B2, B3, B4, F1^{I}, F1^{II}, F1^{III}, F1^{IV}, F1^{V}, F1^{VI}, F1^{VII}, F1^{VIII}, F2, F3 angegeben. Hierbei bedeutet ein X bei den Freiläufen F1^{I}, F1^{II}, F1^{III}, F1^{IV}, F1^{V}, F1^{VI}, F1^{VII}, F1^{VIII}, F2, F3 als Schaltelemente in dem Schaltschema, dass die Freiläufe sperren. Dies funktioniert selbsttätig ohne äußere Betätigung. Ferner bedeutet ein X bei einer Bremse B1, B2, B3, B4 als Schaltelement in dem Schaltschema, dass die Bremsen B1, B2, B3, B4 geschlossen sind. Dies funktioniert über eine geeignete Aktuatorik. Ein leeres Feld bei den Freiläufen F1^{I}, F1^{II}, F1^{III}, F1^{IV}, F1^{V}, F1^{VI}, F1^{VII}, F1^{VIII}, F2, F3 bedeutet, dass diese nicht sperren. Ein leeres Feld bei den Bremsen B1, B2, B3, B4 bedeutet, dass diese geöffnet sind.

Im Einzelnen ergibt sich aus dem Schaltschema gemäß Figur 17, dass zum Realisieren oder Schalten eines ersten Ganges G1 das fünfte als Freilauf ausgeführte Schaltelement F1^{I}, F1^{II}, F1^{III}, F1^{IV}, F1^{V}, F1^{VI}, F1^{VII}, F1^{VIII} , das sechste als Freilauf ausgeführte Schaltelement F2 und das siebente als Freilauf ausgeführte Schaltelement F3 sperren, dass zum Realisieren eines zweiten Ganges G2 das zweite als Bremse ausgeführte Schaltelement B2 geschlossen ist sowie das sechste als Freilauf ausgeführte Schaltelement F2 und das siebente als Freilauf ausgeführte Schaltelement F3 sperren, dass zum Realisieren eines dritten Ganges G3 das erste als Bremse ausgeführte Schaltelement B1 geschlossen ist sowie das sechste als Freilauf ausgeführte Schaltelement F2 und das siebente als Freilauf ausgeführte Schaltelement F3 sperren, dass zum Realisieren eines vierten Ganges G4 das vierte als Bremse ausgeführte Schaltelement B4 geschlossen ist sowie das fünfte als Freilauf ausgeführte Schaltelement F1^{I}, F1^{II}, F1^{III}, F1^{IV}, F1^{V}, F1^{VI}, F1^{VII}, F1^{VIII} und das sechste als Freilauf ausgeführte Schaltelement F2 sperren, dass zum Realisieren eines fünften Ganges G5 das dritte als Bremse ausgeführte Schaltelement B3 geschlossen ist sowie das fünfte als Freilauf ausgeführte Schaltelement F1^{I}, F1^{II}, F1^{III}, F1^{IV}, F1^{V}, F1^{VI}, F1^{VII}, F1^{VIII} und das siebente als Freilauf ausgeführte Schaltelement F3 sperren, dass zum Realisieren eines sechsten Ganges G6 das zweite als Bremse ausgeführte Schaltelement B2 und das dritte als Bremse ausgeführte Schaltelement B3 geschlossen sind sowie das siebente als Freilauf ausgeführte Schaltelement F3 sperrt, dass zum Realisieren eines siebenten Ganges G7 das erste als Bremse ausgeführte Schaltelement B1 und das dritte als Bremse ausgeführte Schaltelement B3 geschlossen sind sowie das siebente als Freilauf ausgeführte Schaltelement F3 sperrt, dass zum Realisieren eines achten Ganges G8 das dritte als Bremse ausgeführte Schaltelement B3 und das vierte als Bremse ausgeführte Schaltelement B4 geschlossen sind sowie das fünfte als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines neunten Ganges G9 das zweite als Bremse ausgeführte Schaltelement B2, das dritte als Bremse ausgeführte Schaltelement B3 und das vierte als Bremse ausgeführte Schaltelement B4 geschlossen sind, und/oder dass zum Realisieren eines zehnten Ganges G10 das erste als Bremse ausgeführte Schaltelement B1, das dritte als Bremse ausgeführte Schaltelement B3 und das vierte als Bremse ausgeführte Schaltelement B4 geschlossen sind.

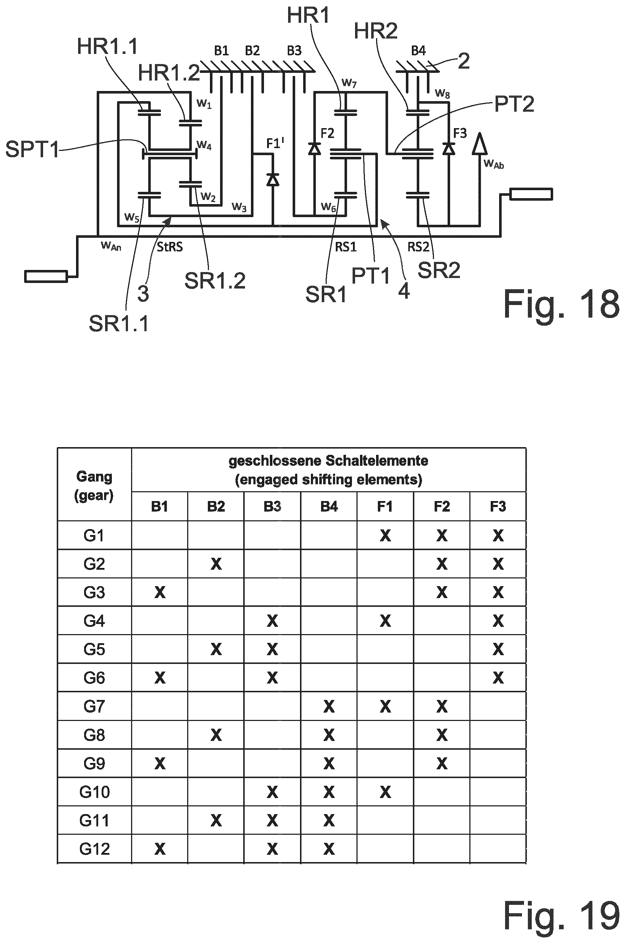

In Figur 18 ist das Tretlagergetriebe beispielhaft mit einer ersten Getriebeschaltgruppe 3 als Dreiganggetriebegruppe und mit einer zweiten Getriebeschaltgruppe 4 als erste Zweiganggruppe und als zweite Zweiganggruppe mit einem ersten Planetenradsatzes RS1 und einem zweiten Planetenradsatz RS2 dargestellt, denen ein drittes Schaltelement B3 als Bremse, ein viertes Schaltelement B4 als Bremse, ein sechstes Schaltelement F2 als Freilauf und ein siebentes Schaltelement F3 als Freilauf zugeordnet sind. Im Detail ist zur Anbindung der zweiten Getriebeschaltgruppe 4 an die erste Getriebeschaltgruppe 3 vorgesehen, dass bei der ersten Zweiganggruppe der Planetenradträger PT1 des ersten Planetenradsatzes RS1 mit der fünften Welle W5 als Ausgangswelle des ersten Stufenplanetenradsatzes StRS1 verbunden ist, dass das Hohlrad HR1 des ersten Planetenradsatzes RS1 über eine siebente Welle W7 mit dem Planetenradträger PT2 des zweiten Planetenradsatzes RS2 verbunden ist, dass das Sonnenrad SR1 des ersten Planetenradsatzes RS1 über eine sechste Welle W6 bei geschlossenem dritten Schaltelement B3 an dem Gehäuse 2 festsetzbar ist, dass zum Verblocken des ersten Planetenradsatzes RS1 im Rahmen einer ersten Verblockungsvariante das Sonnenrad SR1 bei gesperrtem sechsten Schaltelement F2 in einer ersten Anordnungsvariante mit dem Hohlrad HR1 des ersten Planetenradsatzes RS1 verbindbar ist, wobei die weiteren Verblockungsvarianten durch die Verwendung der anderen Elemente bei dem ersten Planetenradsätze RS1 über das sechste Schaltelement F2 realisiert werden, dass bei der zweiten Zweiganggruppe das Sonnenrad SR2 des zweiten Planetenradsatzes RS2 mit der Getriebeausgangswelle WAb verbunden ist, dass das Hohlrad HR3 des zweiten Planetenradsatzes RS2 über eine achte Welle W8 bei geschlossenem vierten Schaltelement B4 an dem Gehäuse 2 festsetzbar ist, und dass zum Verblocken des zweiten Planetenradsatzes RS2 im Rahmen einer ersten Verblockungsvariante das Sonnenrad SR2 bei gesperrtem siebten Schaltelement F3 in einer ersten Anordnungsvariante mit dem Hohlrad HR2 des zweiten Planetenradsatzes R2 verbindbar ist, wobei die weiteren Verblockungsvarianten durch die Verwendung der anderen Elemente bei dem zweiten Planetenradsätze RS2 über das siebente Schaltelement F3 realisiert werden. Die Anbindungen des ersten Stufenplanetenradsatzes StRS1 bei der ersten Getriebeschaltgruppe 3 wurden oben bereits beschrieben.

In Figur 19 ist ein Schaltschema für das in Figur 18 gezeigte Tretlagergetriebe mit der ersten Getriebeschaltgruppe 3 als Dreiganggetriebe und mit der zweiten Getriebeschaltgruppe 4 mit zwei Zweiganggruppen dargestellt. Hieraus ergibt sich, dass 3x2x2 zwölf Gänge G1, G2, G3, G4, G5, G6, G7, G8, G9, G10, G11, G12 realisierbar sind. In dem Schaltschema sind die für den jeweiligen Gang G1, G2, G3, G4, G5, G6, G7, G8, G9, G10, G11, G12 verwendeten Schaltelemente B1, B2, B3, B4, F1^{I}, F1^{II}, F1^{III}, F1^{IV}, F1^{V}, F1^{VI}, F1^{VII}, F1^{VIII}, F2, F3 angegeben. Hierbei bedeutet ein X bei den Freiläufen F1^{I}, F1^{II}, F1^{III}, F1^{IV}, F1^{V}, F1^{VI}, F1^{VII}, F1^{VIII}, F2, F3 als Schaltelemente in dem Schaltschema, dass die Freiläufe sperren. Dies funktioniert selbsttätig ohne äußere Betätigung. Ferner bedeutet ein X bei einer Bremse B1, B2, B3, B4 als Schaltelement in dem Schaltschema, dass die Bremsen B1, B2, B3, B4 geschlossen sind. Dies funktioniert über eine geeignete Aktuatorik. Ein leeres Feld bei den Freiläufen F1^{I}, F1^{II}, F1^{III}, F1^{IV}, F1^{V}, F1^{VI}, F1^{VII}, F1^{VIII}, F2, F3 bedeutet, dass diese nicht sperren. Ein leeres Feld bei den Bremsen B1, B2, B3, B4 bedeutet, dass diese geöffnet sind.

Im Einzelnen ergibt sich aus dem Schaltschema gemäß Figur 19, dass zum Realisieren oder Schalten eines ersten Ganges G1 das fünfte als Freilauf ausgeführte Schaltelement F1^{I}, F1^{II}, F1^{III}, F1^{IV}, F1^{V}, F1^{VI}, F1^{VII}, F1^{VIII} , das sechste als Freilauf ausgeführte Schaltelement F2 und das siebente als Freilauf ausgeführte Schaltelement F3 sperren, dass zum Realisieren eines zweiten Ganges G2 das zweite als Bremse ausgeführte Schaltelement B2 geschlossen ist sowie das sechste als Freilauf ausgeführte Schaltelement F2 und das siebente als Freilauf ausgeführte Schaltelement F3 sperren, dass zum Realisieren eines dritten Ganges G3 das erste als Bremse ausgeführte Schaltelement B1 geschlossen ist sowie das sechste als Freilauf ausgeführte Schaltelement F2 und das siebente als Freilauf ausgeführte Schaltelement F3 sperren, dass zum Realisieren eines vierten Ganges G4 das dritte als Bremse ausgeführte Schaltelement B3 geschlossen ist sowie das fünfte als Freilauf ausgeführte Schaltelement F1^{I}, F1^{II}, F1^{III}, F1^{IV}, F1^{V}, F1^{VI}, F1^{VII}, F1^{VIII} und das siebente als Freilauf ausgeführte Schaltelement F3 sperren, dass zum Realisieren eines fünften Ganges G5 das zweite als Bremse ausgeführte Schaltelement B2 und das dritte als Bremse ausgeführte Schaltelement B3 sowie das siebente als Freilauf ausgeführte Schaltelement F3 sperren, dass zum Realisieren eines sechsten Ganges G6 das erste als Bremse ausgeführte Schaltelement B1 und das dritte als Bremse ausgeführte Schaltelement B3 geschlossen sind sowie das siebente als Freilauf ausgeführte Schaltelement F3 sperrt, dass zum Realisieren eines siebenten Ganges G7 das vierte als Bremse ausgeführte Schaltelement B4 geschlossen ist sowie das fünfte als Freilauf ausgeführte Schaltelement F1^{I}, F1^{II}, F1^{III}, F1^{IV}, F1^{V}, F1^{VI}, F1^{VII}, F1^{VIII} und das sechste als Freilauf ausgeführte Schaltelement F2 sperren, dass zum Realisieren eines achten Ganges G8 das zweite als Bremse ausgeführte Schaltelement B2 und das vierte als Bremse ausgeführte Schaltelement B4 geschlossen sind sowie das sechste als Freilauf ausgeführte Schaltelement F2 sperrt, dass zum Realisieren eines neunten Ganges G9 das erste als Bremse ausgeführte Schaltelement B1 und das vierte als Bremse ausgeführte Schaltelement B4 geschlossen sind sowie das sechste als Freilauf ausgeführte Schaltelement F2 sperrt, dass zum Realisieren eines zehnten Ganges G10 das dritte als Bremse ausgeführte Schaltelement B3 und das vierte als Bremse ausgeführte Schaltelement B4 geschlossen sind sowie das fünfte als Freilauf ausgeführte Schaltelement F1^{I}, F1^{II}, F1^{III}, F1^{IV}, F1^{V}, F1^{VI}, F1^{VII}, F1^{VIII} sperrt, dass zum Realisieren eines elften Ganges G11 das zweite als Bremse ausgeführte Schaltelement B2, das dritte als Bremse ausgeführte Schaltelement B3 und das vierte als Bremse ausgeführte Schaltelement B4 geschlossen sind, und/oder dass zum Realisieren eines zwölften Ganges G12 das erste als Bremse ausgeführte Schaltelement B1, das dritte als Bremse ausgeführte Schaltelement B3 und das vierte als Bremse ausgeführte Schaltelement B4 geschlossen sind.

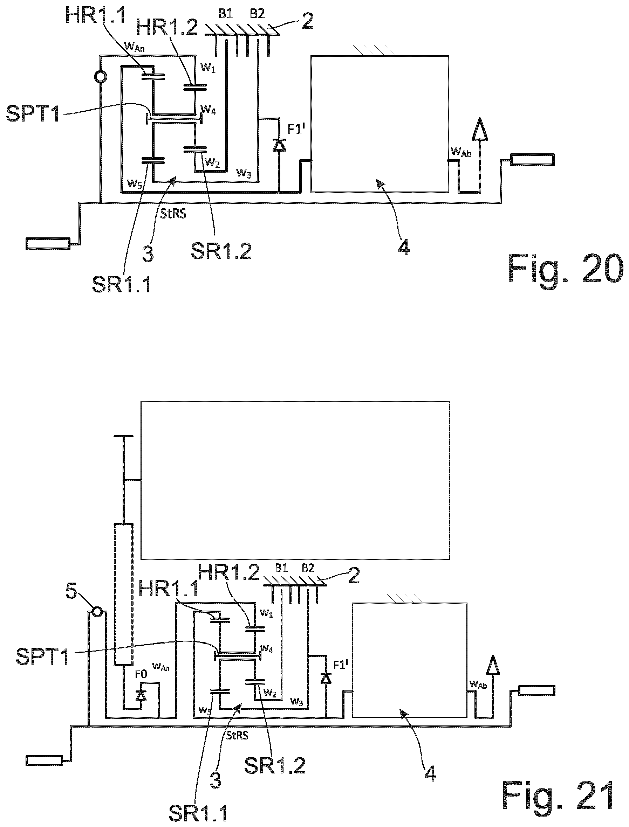

In Figur 20 ist eine Ausführung des erfindungsgemäßen Tretlagergetriebes anhand Figur 1 gezeigt, bei der ein Drehmomentsensor 5 mit der Tretkurbelwelle bzw. mit der Getriebeeingangswelle WAn verbunden bzw. verbindbar ist. Beispielsweise kann ein scheibenförmiger Drehmomentsensor 5 am Getriebeeingang angeordnet werden. Der Drehmomentsensor 5 kann jedoch auch auf andere Art und Weise ausgeführt werden.

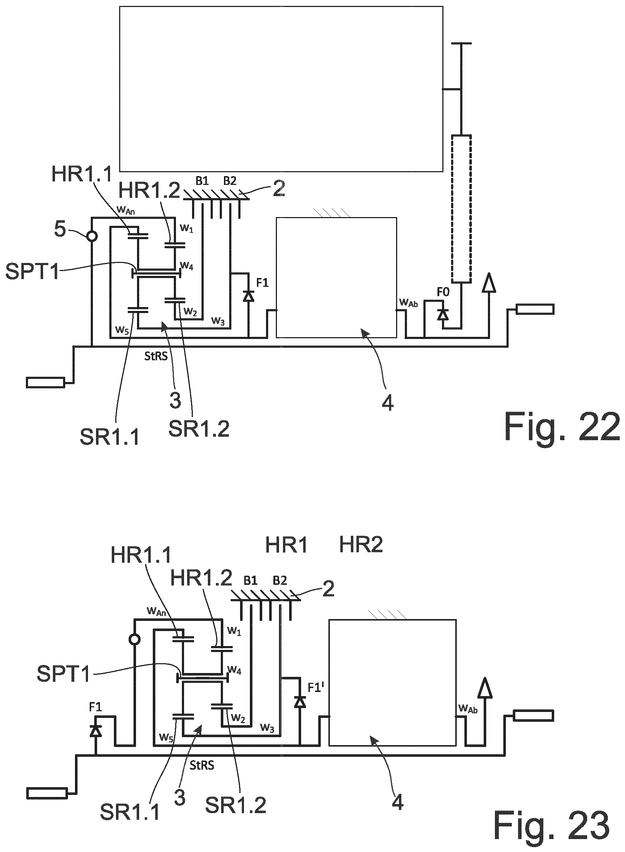

In den Figuren 21 und 22 ist jeweils eine Ausführung des erfindungsgemäßen Tretlagergetriebes anhand Figur 20 mit einer zusätzlichen elektrischen Maschine EM dargestellt. Die elektrische Maschine EM kann an der Tretkurbelwelle WAn angebunden werden, wie dies in Figur 21 angedeutet ist. Es ist auch denkbar, dass die elektrische Maschine EM an der Getriebeausgangswelle WAb angebunden wird, wie dies in Figur 22 gezeigt ist. Die elektrische Maschine EM ist vorzugsweise achsparallel zur Tretkurbelwelle bzw. Getriebeeingangswelle WAn angeordnet. Es wäre jedoch auch eine koaxiale Anordnung der elektrischen Maschine EM zur Tretkurbelwelle möglich. Unabhängig, davon ist es vorteilhaft, die elektrische Maschine EM über einen Freilauf F0 oder dergleichen anzubinden, damit beim Betrieb ohne die elektrische Maschine EM keine Verluste durch die mitdrehende elektrische Maschine EM verursacht werden.

In Figur 23 ist eine Ausführung des erfindungsgemäßen Tretlagergetriebes anhand Figur 20 mit einem zusätzlichen Freilauf F zwischen der Tretkurbel und dem Getriebeeingang des Tretlagergetriebes dargestellt. Auf diese Weise kann bei Tretunterbrechung der Freilauf öffnen und entkoppelt die Tretkurbel von den Trägheitsmassen des Getrieberadsatzes und insbesondere der elektrischen Maschine EM, sodass am Pedal keine Massenkräfte spürbar sind.

### Bezugszeichen

- 1: Fahrrad oder Pedelec
- 2: Gehäuse bzw. Tretlagergehäuse
- 3: erste Getriebeschaltgruppe
- 4: zweite Getriebeschaltgruppe
- 5: Drehmomentsensor
- EM: elektrische Maschine
- F0: Freilauf für elektrische Maschine
- F: zusätzlicher Freilauf
- SR1: Sonnenrad des ersten Planetenradsatzes
- PT1: Planetenradträger des ersten Planetenradsatzes
- HR1: Hohlrad des ersten Planetenradsatzes
- SR2: Sonnenrad des zweiten Planetenradsatzes
- PT2: Planetenradträger des zweiten Planetenradsatzes
- HR2: Hohlrad des zweiten Planetenradsatzes
- SR1.1: erstes Sonnenrad mit größerer Zähnezahl des ersten Stufenplanetenradsatzes
- SR1.2: zweites Sonnenrad mit kleinerer Zähnezahl des ersten Stufenplanetenradsatzes
- HR1.1: erstes Hohlrad mit größerer Zähnezahl des ersten Stufenplanetenradsatzes
- HR1.2: zweites Hohlrad mit kleinerer Zähnezahl des ersten Stufenplanetenradsatzes
- SPT1: Stufenplanetenradträger des ersten Stufenplanetenradsatzes
- SR2.1: Sonnenrad des zweiten Stufenplanetenradsatzes
- HR2.1: erstes Hohlrad mit größerer Zähnezahl des zweiten Stufenplanetenradsatzes
- HR2.2: zweites Hohlrad mit kleinerer Zähnezahl des zweiten Stufenplanetenradsatzes
- SPT2: Stufenplanetenradträger des zweiten Stufenplanetenradsatzes
- RS1: erster Planetenradsatz
- RS2: zweiter Planetenradsatz
- StRS1: erster Stufenplanetenradsatz
- StRS2: zweiter Stufenplanetenradsatz
- WAn: Getriebeeingangswelle bzw. Tretkurbelwelle
- WAb: Getriebeausgangswelle
- W1: erste Welle
- W2: zweite Welle
- W3: dritte Welle
- W4: vierte Welle
- W5: fünfte Welle
- W6: sechste Welle
- W7: siebente Welle
- W8: achte Welle
- G1: erster Gang
- G2: zweiter Gang
- G3: dritter Gang
- G4: vierter Gang
- G5: fünfter Gang
- G6: sechster Gang
- G7: siebenter Gang
- G8: achter Gang
- G9: neunter Gang
- G10: zehnter Gang
- G11: elfter Gang
- G12: zwölfter Gang
- B1: erstes als Bremse ausgeführtes Schaltelement
- B2: zweites als Bremse ausgeführtes Schaltelement
- B3: drittes als Bremse ausgeführtes Schaltelement
- B4: viertes als Bremse ausgeführtes Schaltelement
- F1^{I}: fünftes als Freilauf ausgeführtes Schaltelement in einer ersten Anordnungsposition
- F1^{II}: fünftes als Freilauf ausgeführtes Schaltelement in einer zweiten Anordnungsposition
- F1^{III}: fünftes als Freilauf ausgeführtes Schaltelement in einer dritten Anordnungsposition
- F1^{IV}: fünftes als Freilauf ausgeführtes Schaltelement in einer vierten Anordnungsposition
- F1^{V}: fünftes als Freilauf ausgeführtes Schaltelement in einer fünften Anordnungsposition
- F1^{VI}: fünftes als Freilauf ausgeführtes Schaltelement in einer sechsten Anordnungsposition
- F1^{VII}: fünftes als Freilauf ausgeführtes Schaltelement in einer siebente Anordnungsposition
- F1^{VIII}: fünftes als Freilauf ausgeführtes Schaltelement in einer achte Anordnungsposition
- F2: sechstes als Freilauf ausgeführtes Schaltelement
- F3: siebentes als Freilauf ausgeführtes Schaltelement

## Patentansprüche

1. Tretlagergetriebe in Planetenbauweise für ein Fahrrad oder ein Pedelec (1), mit einer Tretkurbelwelle (WAn) als Antrieb und einer Getriebeausgangswelle (WAb) als Abtrieb und mit weiteren Wellen (W1, W2, W3, W4, W5, W6, W7) sowie mit einer ersten Getriebeschaltgruppe (3) und einer zweiten Getriebeschaltgruppe (4), die zum Realisieren von mehreren Gängen (G1, G2, G3, G4, G5, G6, G7, G8, G9, G10, G11, G12) miteinander gekoppelt sind, wobei die erste Getriebeschaltgruppe (3) einen zweistufigen Stufenplanetenradsatz (StRS1) umfasst, dem drei Schaltelemente (B1, B2, F1^{I}, F1^{II}, F1^{III}, F1^{IV}, F1^{V}, F1^{VI}, F1^{VII}, F1^{VIII}) zugeordnet sind, wobei ein Stufenplanetenradträger (SPT1) als Element des ersten Stufenplanetenradsatzes (StRS1) drehbar gelagert, **dadurch gekennzeichnet, dass** eine erste Welle (W1) als Eingangswelle des ersten Stufenplanetenradsatzes (StRS1) mit einem zweiten Hohlrad (HR1.2) als Element des ersten Stufenplanetenradsatzes (StRS1) verbunden ist, wobei eine fünfte Welle (W5) als Ausgangswelle des ersten Stufenplanetenradsatzes (StRS1) mit einem ersten Hohlrad (HR1.1) als Element des ersten Stufenplanetenradsatz (StRS1) verbunden ist, wobei ein zweites Sonnenrad (SR1.2) als Element des ersten Stufenplanetenradsatz (StRS1) über ein erstes Schaltelement (B1) an einem Gehäuse (2) festsetzbar ist, wobei ein erstes Sonnenrad (SR1.1) als Element des ersten Stufenplanetenradsatzes (StRS1) über ein zweites Schaltelement (B2) an dem Gehäuse (2) festsetzbar ist, und wobei zum Verblocken des Stufenplanetenradsatzes (StRS1) zwei Elemente des ersten Stufenplanetenradsatzes (StRS1) über ein fünftes Schaltelement (F11, FI ", F1"1, F1IV, F1v, F1vI, F1vII, F1VIII) miteinander verbindbar sind.

2. Tretlagergetriebe nach Anspruch 1, **dadurch gekennzeichnet, dass** die erste Getriebeschaltgruppe (3) der zweiten Getriebeschaltgruppe (4) vorgeschaltet oder nachgeschaltet ist.

3. Tretlagergetriebe nach einem der vorangehenden Ansprüche, **dadurch gekennzeichnet, dass** die zweite Getriebeschaltgruppe (4) einen ersten Planetenradsatz (RS1) umfasst, dem ein drittes Schaltelement (B3) und ein sechstes Schaltelement (F2) zugeordnet sind, wobei bei der zweiten Getriebeschaltgruppe (4) ein zweites Element des ersten Planetenradsatzes (RS1) mit der Tretkurbelwelle (WAn) oder mit der fünften Welle (W5) als Ausgangswelle des ersten Stufenplanetenradsatzes (StRS1) verbunden ist, wobei ein erstes Element des ersten Planetenradsatzes (RS1) über das drittes Schaltelement (B3) an dem Gehäuse (2) festsetzbar ist, wobei ein drittes Element des ersten Planetenradsatzes (RS1) mit der Getriebeausgangswelle (WAb) oder mit der ersten Welle (W1) als Eingangswelle des ersten Stufenplanetenradsatzes (StRS1) verbunden ist, und wobei zum Verblocken des ersten Planetenradsatzes (RS1) zwei Elemente des ersten Planetenradsatzes (RS1) über das sechste Schaltelement (F2) miteinander verbindbar sind.

4. Tretlagergetriebe nach einem der Ansprüche 1 oder 2, **dadurch gekennzeichnet, dass** die zweite Getriebeschaltgruppe (4) einen ersten Planetenradsatz (RS1) und einen zweiten Planetenradsatz (RS2) umfasst, denen ein drittes Schaltelement (B3), ein viertes Schaltelement (B4) und ein sechstes Schaltelement (F2) zugeordnet sind, wobei bei der zweiten Getriebeschaltgruppe (4) ein zweites Element des ersten Planetenradsatzes (RS1) mit der Tretkurbelwelle (WAn) oder mit der fünften Welle (W5) als Ausgangswelle des ersten Stufenplanetenradsatzes (StRS1) verbunden ist, wobei ein erstes Element des ersten Planetenradsatzes (RS1) und ein erstes Element des zweiten Planetenradsatzes (RS2) mit der Getriebeausgangswelle (WAb) oder mit der ersten Welle (W1) als Eingangswelle des ersten Stufenplanetenradsatzes (StRS1) verbunden sind, wobei ein drittes Element des ersten Planetenradsatzes (RS1) über das dritte Schaltelement (B3) an dem Gehäuse (2) festsetzbar ist, wobei das dritte Element des ersten Planetenradsatzes (RS1) mit einem zweiten Element des zweiten Planetenradsatzes (RS2) verbunden ist, wobei ein drittes Element des zweiten Planetenradsatzes (RS2) über das vierte Schaltelement (B4) an dem Gehäuse (2) festsetzbar ist, und wobei zum Verblocken des ersten Planetenradsatzes (RS1) und des zweiten Planetenradsatzes (RS2) zwei mit Elementen der Planetenradsätze (RS1, RS2) verbundene Wellen über das sechste Schaltelement (F2) miteinander verbindbar sind.

5. Tretlagergetriebe nach einem der Ansprüche 1 oder 2, **dadurch gekennzeichnet, dass** die zweite Getriebeschaltgruppe (4) einen zweiten Stufenplanetenradsatz (StRS2) umfasst, dem ein drittes Schaltelement (B3), ein viertes Schaltelement (B4) und ein sechstes Schaltelement (F2) zugeordnet sind, wobei bei der zweiten Getriebeschaltgruppe (4) ein zweites Hohlrad (HR2.2) als Element des zweiten Stufenplanetenradsatzes (StRS2) mit der Tretkurbelwelle (WAn) oder mit der fünften Welle W5 als Ausgangswelle des ersten Stufenplanetenradsatzes (StRS1) verbunden ist, wobei ein erstes Hohlrad (HR2.1) als Element des zweiten Stufenplanetenradsatzes (StRS2) mit der Getriebeausgangswelle (WAb) oder mit der ersten Welle (W1) als Eingangswelle des ersten Stufenplanetenradsatzes (StRS1) verbunden ist, wobei ein Stufenplanetenradträger (SPT2) als Element des zweiten Stufenplanetenradsatzes (StRS2) über das dritte Schaltelement (B3) an dem Gehäuse (2) festsetzbar ist, wobei ein Sonnenrad (SR2.1) als Element des zweiten Stufenplanetenradsatzes (StRS2) über das vierte Schaltelement (B4) an dem Gehäuse (2) festsetzbar ist, und wobei zum Verblocken des zweiten Stufenplanetenradsatzes (StRS2) zwei Elemente des zweiten Stufenplanetenradsatzes (StRS2) über das sechste Schaltelement (F2) miteinander verbindbar sind.

6. Tretlagergetriebe nach einem der Ansprüche 1 oder 2, **dadurch gekennzeichnet, dass** die zweite Getriebeschaltgruppe (4) einen ersten Planetenradsatz (RS1) und einen zweiten Planetenradsatz (RS2) umfasst, denen ein drittes Schaltelement (B3), ein viertes Schaltelement (B4), ein sechstes Schaltelement (F2) und ein siebentes Schaltelement (F3) zugeordnet sind, wobei bei der zweiten Getriebeschaltgruppe (4) ein zweites Element des ersten Planetenradsatzes (RS1) mit der Tretkurbelwelle (WAn) oder mit der fünften Welle (W5) als Ausgangswelle des ersten Stufenplanetenradsatzes (StRS1) verbunden ist, wobei ein erstes Element des ersten Planetenradsatzes (RS1) mit der Getriebeausgangswelle (WAb) oder mit der ersten Welle (W1) als Eingangswelle des ersten Stufenplanetenradsatzes (StRS1) verbunden sind, wobei ein drittes Element des ersten Planetenradsatzes (RS1) mit einem zweiten Element des zweiten Planetenradsatzes (RS2) verbunden ist, wobei ein drittes Element des zweiten Planetenradsatzes (RS2) über das dritte Schaltelement (B3) an dem Gehäuse (2) festsetzbar ist und über das sechste Schaltelement (F2) mit der Tretkurbelwelle (WAn) oder mit der fünften Welle (W5) als Ausgangswelle des ersten Stufenplanetenradsatzes (StRS1) verbindbar ist, und wobei ein erstes Element des zweiten Planetenradsatzes (RS2) über das vierte Schaltelement (B4) an dem Gehäuse (2) festsetzbar ist und über das siebente Schaltelement (F3) mit der Getriebeausgangswelle (WAb) oder mit der ersten Welle (W1) als Eingangswelle des ersten Stufenplanetenradsatzes (StRS1) verbindbar ist.

7. Tretlagergetriebe nach einem der Ansprüche 1 oder 2, **dadurch gekennzeichnet, dass** die zweite Getriebeschaltgruppe (4) eine erste Zweiganggruppe und eine zweite Zweiganggruppe umfasst, wobei der ersten Zweiganggruppe das dritte Schaltelement (B3) und das sechste Schaltelement (F2) zugeordnet sind und wobei der zweiten Zweiganggruppe das vierte Schaltelement (B4) und das siebente Schaltelement (F3) zugeordnet sind.

8. Tretlagergetriebe nach Anspruch 7, **dadurch gekennzeichnet, dass** bei der ersten Zweiganggruppe ein zweites Element des ersten Planetenradsatzes (RS1) mit der Tretkurbelwelle (WAn) oder mit der fünften Welle (W5) als Ausgangswelle des ersten Stufenplanetenradsatzes (StRS1) verbunden ist, dass ein drittes Element des ersten Planetenradsatzes (RS1) mit einem zweiten Element des zweiten Planetenradsatzes (RS2) verbunden ist, dass ein erstes Element des ersten Planetenradsatzes (RS1) über das dritte Schaltelement (B3) an dem Gehäuse (2) festsetzbar ist, dass zum Verblocken des ersten Planetenradsatzes (RS1) zwei Elemente des ersten Planetenradsatzes (RS1) über das sechste Schaltelement (F2) miteinander verbindbar sind, dass bei der ersten Zweiganggruppe ein erstes Element des zweiten Planetenradsatzes (RS2) mit der Getriebeausgangswelle (WAb) oder mit der ersten Welle (W1) als Eingangswelle des ersten Stufenplanetenradsatzes (StRS1) verbunden ist, dass ein drittes Element des zweiten Planetenradsatzes (RS2) über das vierte Schaltelement (B4) an dem Gehäuse (2) festsetzbar ist, und dass zum Verblocken des zweiten Planetenradsatzes (RS2) zwei Elemente des zweiten Planetenradsatzes (RS2) über das siebente Schaltelement (F3) miteinander verbindbar sind.

9. Tretlagergetriebe nach einem der vorangehenden Ansprüche, **dadurch gekennzeichnet, dass** das erste Schaltelement (B1), das zweite Schaltelement (B2), das dritte Schaltelement (B3) und das vierte Schaltelement (B4) jeweils als formschlüssige Bremse ausgeführt sind, und/oder dass das fünfte Schaltelement (F1^{I}, F1^{II}, F1^{III}, F1^{IV}, F1^{V}, F1^{VI}, F1^{VII}, F1^{VIII}), das sechste Schaltelement (F2) und das siebente Schaltelement (F3) jeweils als Freilauf ausgeführt sind.

10. Tretlagergetriebe nach einem der vorangehenden Ansprüche, **dadurch gekennzeichnet, dass** der erste Planetenradsatz (RS1) und/oder der zweite Planetenradsatz (RS2) jeweils als Minus-Planetenradsatz ausgeführt sind.

11. Tretlagergetriebe nach Anspruch 10, **dadurch gekennzeichnet, dass** bei einem Minus-Planetenradsatz das erste Element als Sonnenrad (SR1, SR2), das zweite Element als Planetenradträger (PT1, PT2) und das dritte Element als Hohlrad (HR1, HR2) ausgeführt sind.

12. Tretlagergetriebe nach einem der vorangehenden Ansprüche, **dadurch gekennzeichnet, dass** der erste Planetenradsatz (RS1) und/oder der zweite Planetenradsatz (RS2) jeweils als Plus-Planetenradsatz ausgeführt sind.

13. Tretlagergetriebe nach Anspruch 12, **dadurch gekennzeichnet, dass** bei einem Plus-Planetenradsatz das erste Element als Sonnenrad (SR1, SR2), das zweite Element als Hohlrad (HR1, HR2) und das dritte Element als Planetenradträger (PT1, PT2) ausgeführt sind.

14. Tretlagergetriebe nach einem der vorangehenden Ansprüche, **dadurch gekennzeichnet, dass** ein Drehmomentsensor (5) mit der Tretkurbelwelle (WAn) verbunden ist.

15. Tretlagergetriebe nach einem der vorangehenden Ansprüche, **dadurch gekennzeichnet, dass** zumindest eine elektrische Maschine (EM) mit der Tretkurbelwelle (WAn) oder mit der Getriebeausgangswelle (WAb) verbunden oder verbindbar ist.

16. Tretlagergetriebe nach Anspruch 15, **dadurch gekennzeichnet, dass** die elektrische Maschine (EM) achsparallel zur Tretkurbelwelle (WAn) angeordnet ist.

17. Fahrrad oder Pedelec (1) mit dem Tretlagergetriebe nach einem der vorangehenden Ansprüche.

## Claims

1. Planetary bottom bracket gear for a bicycle or a pedelec (1), with a pedal crank shaft (WAn) as drive and a gear output shaft (WAb) as output and with further shafts (W1, W2, W3, W4, W5, W6, W7) and with a first gear shift group (3) and a second gear shift group (4), which are coupled to each other in order to realise multiple gears (G1, G2, G3, G4, G5, G6, G7, G8, G9, G10, G11, G12), wherein the first gear shift group (3) comprises a two-step multi-step planetary gear set (StRS1) which is assigned three shifting elements (B1, B2, F1^{I}, F1^{II}, F1^{III}, F1^{IV}, F1^{V}, F1^{VI}, F1^{VII}, F1^{VIII}),
wherein a multi-step planetary gear carrier (SPT1) is rotatably mounted as an element of the first multi-step planetary gear set (StRS1), **characterized in that** a first shaft (W1) as an input shaft of the first multi-step planetary gear set (StRS1) is connected to a second ring gear (HR1.2) as an element of the first multi-step planetary gear set (StRS1), wherein a fifth shaft (W5) as the output shaft of the first multi-step planetary gear set (StRS1) is connected to a first ring gear (HR1.1) as an element of the first multi-step planetary gear set (StRS1), wherein a second sun gear (SR1.2) as an element of the first multi-step planetary gear set (StRS1) can be fixed to a housing (2) via a first shifting element (B1), wherein a first sun gear (SR1.1) as an element of the first multi-step planetary gear set (StRS1) can be fixed to the housing (2) via a second shifting element (B2), and wherein two elements of the first multi-step planetary gear set (StRS1) can be connected to each other via a fifth shifting element (F11, FI ", F1"1, F1IV, F1^{V}, F1vI, F1vII, F1VIII) in order to block the multi-step planetary gear set (StRS1).

2. Bottom bracket gear according to Claim 1, **characterized in that** the first gear shift group (3) is connected upstream or downstream of the second gear shift group (4).

3. Bottom bracket gear according to either of the preceding claims, **characterized in that** the second gear shift group (4) comprises a first planetary gear set (RS1) which is assigned a third shifting element (B3) and a sixth shifting element (F2), wherein, in the case of the second gear shift group (4), a second element of the first planetary gear set (RS1) is connected to the pedal crank shaft (WAn) or to the fifth shaft (W5) as the output shaft of the first multi-step planetary gear set (StRS1), wherein a first element of the first planetary gear set (RS1) can be fixed to the housing (2) via the third shifting element (B3), wherein a third element of the first planetary gear set (RS1) is connected to the gear output shaft (WAb) or to the first shaft (W1) as the input shaft of the first multi-step planetary gear set (StRS1), and wherein two elements of the first planetary gear set (RS1) can be connected to each other via the sixth shifting element (F2) in order to block the first planetary gear set (RS1).

4. Bottom bracket gear according to either of Claims 1 and 2, **characterized in that** the second gear shift group (4) comprises a first planetary gear set (RS1) and a second planetary gear set (RS2), to which a third shifting element (B3), a fourth shifting element (B4) and a sixth shifting element (F2) are assigned, wherein, in the case of the second gear shift group (4), a second element of the first planetary gear set (RS1) is connected to the pedal crank shaft (WAn) or to the fifth shaft (W5) as the output shaft of the first multi-step planetary gear set (StRS1), wherein a first element of the first planetary gear set (RS1) and a first element of the second planetary gear set (RS2) are connected to the gear output shaft (WAb) or to the first shaft (W1) as the input shaft of the first multi-step planetary gear set (StRS1), wherein a third element of the first planetary gear set (RS1) can be fixed to the housing (2) via the third shifting element (B3), wherein the third element of the first planetary gear set (RS1) is connected to a second element of the second planetary gear set (RS2), wherein a third element of the second planetary gear set (RS2) can be fixed to the housing (2) via the fourth shifting element (B4), and wherein two shafts connected to elements of the planetary gear sets (RS1, RS2) can be connected to each other via the sixth shifting element (F2) in order to block the first planetary gear set (RS1) and the second planetary gear set (RS2).

5. Bottom bracket gear according to either of Claims 1 and 2, **characterized in that** the second gear shift group (4) comprises a second multi-step planetary gear set (StRS2), to which a third shifting element (B3), a fourth shifting element (B4) and a sixth shifting element (F2) are assigned, wherein, in the case of the second gear shift group (4), a second ring gear (HR2.2) is connected as an element of the second multi-step planetary gear set (StRS2) to the pedal crank shaft (WAn) or to the fifth shaft W5 as the output shaft of the first multi-step planetary gear set (StRS1), wherein a first ring gear (HR2.1) as an element of the second multi-step planetary gear set (StRS2) is connected to the gear output shaft (WAb) or to the first shaft (W1) as the input shaft of the first multi-step planetary gear set (StRS1), wherein a multi-step planetary gear carrier (SPT2) as an element of the second multi-step planetary gear set (StRS2) can be fixed to the housing (2) via the third shifting element (B3), wherein a sun gear (SR2.1) as an element of the second multi-step planetary gear set (StRS2) can be fixed to the housing (2) via the fourth shifting element (B4), and wherein two elements of the second multi-step planetary gear set (StRS2) can be connected to each other via the sixth shifting element (F2) in order to block the second multi-step planetary gear set (StRS2).

6. Bottom bracket gear according to either of Claims 1 and 2, **characterized in that** the second gear shift group (4) comprises a first planetary gear set (RS1) and a second planetary gear set (RS2), to which a third shifting element (B3), a fourth shifting element (B4), a sixth shifting element (F2) and a seventh shifting element (F3) are assigned, wherein, in the case of the second gear shift group (4), a second element of the first planetary gear set (RS1) is connected to the pedal crank shaft (WAn) or to the fifth shaft (W5) as the output shaft of the first multi-step planetary gear set (StRS1), wherein a first element of the first planetary gear set (RS1) is connected to the gear output shaft (WAb) or to the first shaft (W1) as the input shaft of the first multi-step planetary gear set (StRS1), wherein a third element of the first planetary gear set (RS1) is connected to a second element of the second planetary gear set (RS2), wherein a third element of the second planetary gear set (RS2) can be fixed to the housing (2) via the third shifting element (B3) and can be connected via the sixth shifting element (F2) to the pedal crank shaft (WAn) or to the fifth shaft (W5) as the output shaft of the first multi-step planetary gear set (StRS1), and wherein a first element of the second planetary gear set (RS2) can be fixed to the housing (2) via the fourth shifting element (B4) and can be connected via the seventh shifting element (F3) to the gear output shaft (WAb) or to the first shaft (W1) as the input shaft of the first multi-step planetary gear set (StRS1).

7. Bottom bracket gear according to either of Claims 1 and 2, **characterized in that** the second gear shift group (4) comprises a first two-gear group and a second two-gear group, wherein the first two-gear group is assigned the third shifting element (B3) and the sixth shifting element (F2), and wherein the second two-gear group is assigned the fourth shifting element (B4) and the seventh shifting element (F3).

8. Bottom bracket gear according to Claim 7, **characterized in that**, in the first two-gear group, a second element of the first planetary gear set (RS1) is connected to the pedal crank shaft (WAn) or to the fifth shaft (W5) as the output shaft of the first multi-step planetary gear set (StRS1), **in that** a third element of the first planetary gear set (RS1) is connected to a second element of the second planetary gear set (RS2), **in that** a first element of the first planetary gear set (RS1) can be fixed to the housing (2) via the third shifting element (B3), **in that** two elements of the first planetary gear set (RS1) can be connected to each other via the sixth shifting element (F2) in order to block the first planetary gear set (RS1), **in that**, in the first two-gear group, a first element of the second planetary gear set (RS2) is connected to the gear output shaft (WAb) or to the first shaft (W1) as the input shaft of the first multi-step planetary gear set (StRS1), **in that** a third element of the second planetary gear set (RS2) can be fixed to the housing (2) via the fourth shifting element (B4), and **in that** two elements of the second planetary gear set (RS2) can be connected to each other via the seventh shifting element (F3) in order to block the second planetary gear set (RS2).

9. Bottom bracket gear according to one of the preceding claims, **characterized in that** the first shifting element (B1), the second shifting element (B2), the third shifting element (B3) and the fourth shifting element (B4) are each designed as a positive engagement brake, and/or **in that** the fifth shifting element (F1^{I}, F1^{II}, F1^{III}, F1^{IV}, F1^{V}, F1^{VI}, F1^{VII}, F1^{VIII}), the sixth shifting element (F2) and the seventh shifting element (F3) are each configured as a freewheel.

10. Bottom bracket gear according to one of the preceding claims, **characterized in that** the first planetary gear set (RS1) and/or the second planetary gear set (RS2) are/is each designed as a minus planetary gear set.

11. Bottom bracket gear according to Claim 10, **characterized in that**, in the case of a minus planetary gear set, the first element is designed as a sun gear (SR1, SR2), the second element is designed as a planetary gear carrier (PT1, PT2) and the third element is designed as a ring gear (HR1, HR2).

12. Bottom bracket gear according to one of the preceding claims, **characterized in that** the first planetary gear set (RS1) and/or the second planetary gear set (RS2) are/is each designed as a plus planetary gear set.

13. Bottom bracket gear according to Claim 12, **characterized in that**, in the case of a plus planetary gear set, the first element is designed as a sun gear (SR1, SR2), the second element is designed as a ring gear (HR1, HR2) and the third element is designed as a planetary gear carrier (PT1, PT2).

14. Bottom bracket gear according to one of the preceding claims, **characterized in that** a torque sensor (5) is connected to the pedal crank shaft (WAn).

15. Bottom bracket gear according to one of the preceding claims, **characterized in that** at least one electric machine (EM) is connected or can be connected to the pedal crank shaft (WAn) or to the gear output shaft (WAb).

16. Bottom bracket gear according to Claim 15, **characterized in that** the electric machine (EM) is arranged axially parallel to the pedal crank shaft (WAn).

17. Bicycle or pedelec (1) having the bottom bracket gear according to one of the preceding claims.

## Revendications

1. Transmission de pédalier de conception planétaire pour une bicyclette ou un vélo à assistance électrique (1), avec un vilebrequin de pédale (WAn) en tant qu'entraînement et un arbre de sortie de transmission (WAb) en tant que sortie et avec d'autres arbres (W1, W2, W3, W4, W5, W6, W7) et avec un premier groupe de changement de vitesse (3) et un deuxième groupe de changement de vitesse (4), qui sont couplés l'un à l'autre pour obtenir plusieurs rapports (G1, G2, G3, G4, G5, G6, G7, G8, G9, G10, G11, G12), le premier groupe de changement de vitesse (3) comprenant un ensemble de trains planétaires étagé à deux étages (StRS1) auquel sont associés trois éléments de changement de vitesse (B1, B2, F1^{II}, F1^{II} , F1^{III}, F1^{IV}, F1^{V} , F1^{VI}, F1^{VII}, F1^{VIII}),
un support de trains planétaires étagés (SPT1) étant monté de manière à pouvoir tourner en tant qu'élément du premier ensemble de trains planétaires étagé (StRS1), **caractérisée en ce qu'**un premier arbre (W1) en tant qu'arbre d'entrée du premier ensemble de trains planétaires étagé (StRS1) est relié à une deuxième couronne (HR1.2) en tant qu'élément du premier ensemble de trains planétaires étagé (StRS1), un cinquième arbre (W5) en tant qu'arbre de sortie du premier ensemble de trains planétaires étagé (StRS1) étant relié à une première couronne (HR1.1) en tant qu'élément du premier ensemble de trains planétaires étagé (StRS1), une deuxième roue solaire (SR1.2) en tant qu'élément du premier ensemble de trains planétaires étagé (StRS1) pouvant être fixée à un boîtier (2) par un premier élément de changement de vitesse (B1), une première roue solaire (SR1.1) pouvant être fixée en tant qu'élément du premier ensemble de trains planétaires étagé (StRS1) au boîtier (2) par un deuxième élément de changement de vitesse (B2), et deux éléments du premier ensemble de trains planétaires étagé (StRS1) pouvant être reliés l'un à l'autre par un cinquième élément de changement de vitesse (F11, FI ", F1"1, F1IV, F1v, F1vI, F1vII, F1VIII) pour bloquer l'ensemble de trains planétaires étagé (StRS1).

2. Transmission de pédalier selon la revendication 1, **caractérisée en ce que** le premier groupe de changement de vitesse (3) est branché en amont ou en aval du deuxième groupe de changement de vitesse (4).

3. Transmission de pédalier selon l'une des revendications précédentes, **caractérisée en ce que** le deuxième groupe de changement de vitesse (4) comprend un premier ensemble de trains planétaires (RS1) auquel sont associés un troisième élément de changement de vitesse (B3) et un sixième élément de changement de vitesse (F2), un deuxième élément du premier ensemble de trains planétaires (RS1) étant relié au vilebrequin de pédale (WAn) ou au cinquième arbre (W5) en tant qu'arbre de sortie du premier ensemble de trains planétaires (StRS1) pour le deuxième groupe de changement de vitesse (4), un premier élément du premier ensemble de trains planétaires (RS1) pouvant être fixé au boîtier (2) par le troisième élément de changement de vitesse (B3), un troisième élément du premier ensemble de trains planétaires (RS1) étant relié à l'arbre de sortie de transmission (WAb) ou au premier arbre (W1) en tant qu'arbre d'entrée du premier ensemble de trains planétaires (StRS1), et deux éléments du premier ensemble de trains planétaires (RS1) pouvant être reliés l'un à l'autre par le sixième élément de changement de vitesse (F2) pour bloquer le premier ensemble de trains planétaires (RS1).

4. Transmission de pédalier selon l'une des revendications 1 ou 2, **caractérisée en ce que** le deuxième groupe de changement de vitesse (4) comprend un premier ensemble de trains planétaires (RS1) et un deuxième ensemble de trains planétaires (RS2), auxquels sont associés un troisième élément de changement de vitesse (B3), un quatrième élément de changement de vitesse (B4) et un sixième élément de changement de vitesse (F2), un deuxième élément du premier ensemble de trains planétaires (RS1) étant relié au vilebrequin de pédale (WAn) ou au cinquième arbre (W5) en tant qu'arbre de sortie du premier ensemble de trains planétaires (StRS1) pour le deuxième groupe de changement de vitesse (4), un premier élément du premier ensemble de trains planétaires (RS1) et un premier élément du deuxième ensemble de trains planétaires (RS2) étant reliés à l'arbre de sortie de transmission (WAb) ou au premier arbre (W1) en tant qu'arbre d'entrée du premier ensemble de trains planétaires étagé (StRS1), un troisième élément du premier ensemble de trains planétaires (RS1) pouvant être fixé par le troisième élément de commutation (B3) au boîtier (2), le troisième élément du premier ensemble de trains planétaires (RS1) étant relié à un deuxième élément du deuxième ensemble de trains planétaires (RS2), un troisième élément du deuxième ensemble de trains planétaires (RS2) pouvant être fixé au boîtier (2) par le quatrième élément de changement de vitesse (B4), et deux arbres reliés à des éléments des ensembles de trains planétaires (RS1, RS2) pouvant être reliés l'un à l'autre par le sixième élément de changement de vitesse (F2) pour bloquer le premier ensemble de trains planétaires (RS1) et le deuxième ensemble de trains planétaires (RS2).

5. Transmission de pédalier selon l'une des revendications 1 ou 2, **caractérisée en ce que** le deuxième groupe de changement de vitesse (4) comprend un deuxième ensemble de trains planétaires étagé (StRS2) auquel sont associés un troisième élément de changement de vitesse (B3), un quatrième élément de changement de vitesse (B4) et un sixième élément de changement de vitesse (F2), une deuxième couronne (HR2.2) étant reliée en tant qu'élément du deuxième ensemble de trains planétaires étagé (StRS2) au vilebrequin de pédale (WAn) ou au cinquième arbre W5 en tant qu'arbre de sortie du premier ensemble de trains planétaires étagé (StRS1) pour le deuxième groupe de changement de vitesse (4), une première couronne (HR2.1) en tant qu'élément du deuxième ensemble de trains planétaires étagé (StRS2) étant reliée à l'arbre de sortie de transmission (WAb) ou au premier arbre (W1) en tant qu'arbre d'entrée du premier ensemble de trains planétaires étagé (StRS1), un support de train planétaire étagé (SPT2) en tant qu'élément du deuxième ensemble de trains planétaires étagé (StRS2) pouvant être fixé au boîtier (2) par le troisième élément de changement de vitesse (B3), une roue solaire (SR2.1) pouvant être fixée en tant qu'élément du deuxième ensemble de trains planétaires étagé (StRS2) par le quatrième élément de changement de vitesse (B4) au boîtier (2), et deux éléments du deuxième ensemble de trains planétaires étagé (StRS2) pouvant être reliés l'un à l'autre par le sixième élément de changement de vitesse (F2) pour bloquer le deuxième ensemble de trains planétaires étagé (StRS2).

6. Transmission de pédalier selon l'une des revendications 1 ou 2, **caractérisée en ce que** le deuxième groupe de changement de vitesse (4) comprend un premier ensemble de trains planétaires (RS1) et un deuxième ensemble de trains planétaires (RS2), auxquels sont associés un troisième élément de changement de vitesse (B3), un quatrième élément de changement de vitesse (B4), un sixième élément de changement de vitesse (F2) et un septième élément de changement de vitesse (F3), un deuxième élément du premier ensemble de trains planétaires (RS1) étant relié au vilebrequin de pédale (WAn) ou au cinquième arbre (W5) en tant qu'arbre de sortie du premier ensemble de trains planétaires (StRS1) pour le deuxième groupe de changement de vitesse (4), un premier élément du premier ensemble de trains planétaires (RS1) étant relié à l'arbre de sortie de transmission (WAb) ou au premier arbre (W1) en tant qu'arbre d'entrée du premier ensemble de trains planétaires étagé (StRS1), un troisième élément du premier ensemble de trains planétaires (RS1) étant relié à un deuxième élément du deuxième ensemble de trains planétaires (RS2), un troisième élément du deuxième ensemble de trains planétaires (RS2) pouvant être fixé par le troisième élément de changement de vitesse (B3) au boîtier (2) et pouvant être relié par le sixième élément de changement de vitesse (F2) au vilebrequin de pédale (WAn) ou au cinquième arbre (W5) en tant qu'arbre de sortie du premier ensemble de trains planétaires étagé (StRS1), un premier élément du deuxième ensemble de trains planétaires (RS2) pouvant être fixé au boîtier (2) par le quatrième élément de changement de vitesse (B4) ou pouvant être relié par le septième élément de changement de vitesse (F3) à l'arbre de sortie de transmission (WAb) ou au premier arbre (W1) en tant qu'arbre d'entrée du premier ensemble de trains planétaires étagé (StRS1).

7. Transmission de pédalier selon l'une des revendications 1 ou 2, **caractérisée en ce que** le deuxième groupe de changement de vitesse (4) comprend un premier groupe à deux rapports et un deuxième groupe à deux rapports, le troisième élément de changement de vitesse (B3) et le sixième élément de changement de vitesse (F2) étant associés au premier groupe à deux rapports et le quatrième élément de changement de vitesse (B4) et le septième élément de changement de vitesse (F3) étant associés au deuxième groupe à deux rapports.

8. Transmission de pédalier selon la revendication 7, **caractérisée en ce que** dans le premier groupe à deux rapports, un deuxième élément du premier ensemble de trains planétaires (RS1) est relié au vilebrequin de pédale (WAn) ou au cinquième arbre (W5) en tant qu'arbre de sortie du premier ensemble de trains planétaires étagé (StRS1), qu'un troisième élément du premier ensemble de trains planétaires (RS1) est relié à un deuxième élément du deuxième ensemble de trains planétaires (RS2), qu'un premier élément du premier ensemble de trains planétaires (RS1) peut être fixé au boîtier (2) par le troisième élément de changement de vitesse (B3), que, pour bloquer le premier ensemble de trains planétaires (RS1), deux éléments du premier ensemble de trains planétaires (RS1) peuvent être reliés l'un à l'autre par le sixième élément de changement de vitesse (F2), que, dans le premier groupe à deux rapports, un premier élément du deuxième ensemble de trains planétaires (RS2) est relié à l'arbre de sortie de transmission (WAb) ou au premier arbre (W1) en tant qu'arbre d'entrée du premier ensemble de trains planétaires étagé (StRS1), qu'un troisième élément du deuxième ensemble de trains planétaires (RS2) peut être fixé au boîtier (2) par le quatrième élément de changement de vitesse (B4), et que, pour bloquer le deuxième ensemble de trains planétaires (RS2), deux éléments du deuxième ensemble de trains planétaires (RS2) peuvent être reliés l'un à l'autre par le septième élément de changement de vitesse (F3).

9. Transmission de pédalier selon l'une des revendications précédentes, **caractérisée en ce que** le premier élément de changement de vitesse (B1), le deuxième élément de changement de vitesse (B2), le troisième élément de changement de vitesse (B3) et le quatrième élément de changement de vitesse (B4) sont réalisés chacun sous forme de frein à complémentarité de forme et/ou que le cinquième élément de changement de vitesse (F1^{I}, F1^{II}, F1^{III}, F1^{IV}, F1^{V}, F1^{VI}, F1^{VII}, F1^{VIII}), le sixième élément de changement de vitesse (F2) et le septième élément de changement de vitesse (F3) sont réalisés chacun comme des roues libres.

10. Transmission de pédalier selon l'une des revendications précédentes, **caractérisée en ce que** le premier ensemble de trains planétaires (RS1) et/ou le deuxième ensemble de trains planétaires (RS2) sont réalisés chacun comme un ensemble de trains planétaires négatif.

11. Transmission de pédalier selon la revendication 10, **caractérisée en ce que**, dans le cas d'un ensemble de trains planétaires négatif, le premier élément est réalisé comme une roue solaire (SR1, SR2), le deuxième élément est réalisé comme un support de roue planétaire (PT1, PT2) et le troisième élément est réalisé en comme une couronne (HR1, HR2).

12. Transmission de pédalier selon l'une des revendications précédentes, **caractérisée en ce que** le premier ensemble de trains planétaires (RS1) et/ou le deuxième ensemble de trains planétaires (RS2) sont réalisés chacun comme un ensemble de trains planétaires positif.

13. Transmission de pédalier selon la revendication 12, **caractérisée en ce que**, dans le cas d'un ensemble de trains planétaires positif, le premier élément est réalisé comme une roue solaire (SR1, SR2), le deuxième élément est réalisé comme une couronne (HR1, HR2) et le troisième élément est réalisé comme un support de roue planétaire (PT1, PT2).

14. Transmission de pédalier selon l'une des revendications précédentes, **caractérisée en ce qu'**un capteur de couple de rotation (5) est relié au vilebrequin de pédale (WAn).

15. Transmission de pédalier selon l'une des revendications précédentes, **caractérisée en ce qu'**au moins un moteur électrique (EM) est relié ou peut être relié au vilebrequin de pédale (WAn) ou à l'arbre de sortie de transmission (WAb).

16. Transmission de pédalier selon la revendication 15, **caractérisée en ce que** le moteur électrique (EM) est disposé parallèlement à l'axe par rapport au vilebrequin de manivelle (WAn).

17. Bicyclette ou vélo à assistance électrique (1) avec la transmission de pédalier selon l'une des revendications précédentes.
